# EUROPEAN PATENT APPLICATION

(11) **EP 4 770 230 A1**
(43) Date of publication of application: **01.07.2026**
(21) Application number: 24870425.6
(22) Date of filing: 09.09.2024
(51) Int. Cl.: H04W 72/0446

(54) **COMMUNICATION METHOD AND COMMUNICATION APPARATUS**

(30) Priority: 27.09.2023 CN 202311273438
(71) Applicant: HUAWEI TECHNOLOGIES CO., LTD., Shenzhen 518129 (CN)
(72) Inventor: LIAN, Jin, Shenzhen, Guangdong 518129 (CN); CAI, Shijie, Shenzhen, Guangdong 518129 (CN); GAO, Xiang, Shenzhen, Guangdong 518129 (CN); LIU, Kunpeng, Shenzhen, Guangdong 518129 (CN)
(74) Representative: Thun, Clemens
(86) International application number: PCT/CN2024/117684
(87) International publication number: WO 2025/066880

(57) **Abstract**

This application provides a communication method and a communication apparatus. A terminal device may determine an SRS resource set identifier based on a determined first report configuration, and may determine a quantity m of SRS ports based on the SRS resource set identifier. The terminal device may send a first report. The first report is determined based on the first report configuration, the m SRS ports, and Q ports, and Q is greater than m. In this way, the terminal device may send SRSs through the m ports, to avoid occupying a large quantity of time-frequency resources required for sending SRSs through the Q ports. In addition, a network device may determine channel information of the Q ports based on the first report and channel information of the m ports, estimate an uplink channel based on the channel information of the Q ports, and estimate a downlink channel based on the uplink channel, so that a precoding matrix used for downlink transmission can be determined based on the estimated downlink channel, to improve a downlink precoding capability.

## Description

This application claims priority to Chinese Patent Application No. 202311273438.2, filed with the China National Intellectual Property Administration on September 27, 2023 and entitled "COMMUNICATION METHOD AND COMMUNICATION APPARATUS", which is incorporated herein by reference in its entirety.

### TECHNICAL FIELD

This application relates to the communication field, and more specifically, to a communication method and a communication apparatus in the communication field.

### BACKGROUND

In a time division duplex (time division duplexing, TDD) mode, uplink and downlink of a radio channel have reciprocity. A network device receives a sounding reference signal (sounding reference signal, SRS) sent by a terminal device, performs channel estimation to obtain uplink channel state information (channel state information, CSI), and then obtains downlink CSI based on uplink and downlink reciprocity, to perform downlink precoding based on the downlink CSI.

However, because a time-frequency resource allocated to the SRS is fixed, as a quantity of terminal devices and a quantity of antennas of the terminal devices in a network increase, a problem of insufficient SRS resources occurs. Consequently, channel estimation performance is affected, a downlink precoding capability is deteriorated, and finally a network throughput is reduced.

### SUMMARY

Embodiments of this application provide a communication method and a communication apparatus. A terminal device may send SRSs through m ports, to avoid occupying a large quantity of time-frequency resources required for sending SRSs through Q ports. In addition, a network device may determine channel information of the Q ports based on a first report, estimate an uplink channel based on the channel information of the Q ports, and estimate a downlink channel based on the uplink channel, so that a precoding matrix used for downlink transmission can be determined based on the estimated downlink channel, to improve a downlink precoding capability.

According to a first aspect, a communication method is provided, is applied to a terminal device, and includes: determining a first report configuration; determining a channel sounding reference signal SRS resource set identifier based on the first report configuration; determining a quantity m of SRS ports based on the SRS resource set identifier; and sending a first report. The first report is determined based on the first report configuration, the m SRS ports, and Q ports, Q is determined based on the first report configuration and/or a capability of the terminal device, m and Q are positive integers, and Q is greater than or equal to m.

In the foregoing solution, the terminal device may determine the SRS resource set identifier based on the determined first report configuration, and may determine the quantity m of SRS ports based on the SRS resource set identifier. The terminal device may send the first report. The first report is determined based on the first report configuration, the m SRS ports, and the Q ports, and Q is greater than m. In this way, the terminal device may send SRSs through the m ports, to avoid occupying a large quantity of time-frequency resources required for sending SRSs through the Q ports. In addition, a network device may determine channel information of the Q ports based on the first report and channel information of the m ports, estimate an uplink channel based on the channel information of the Q ports, and estimate a downlink channel based on the uplink channel, so that a precoding matrix used for downlink transmission can be determined based on the estimated downlink channel, to improve a downlink precoding capability.

Optionally, after determining the quantity m of SRS ports, the terminal device may determine, based on an implementation of the terminal device, the m ports from the Q ports supported by the terminal device as the m SRS ports.

Optionally, the m SRS ports are used to measure the channel information of the m ports.

Optionally, determining the quantity m of SRS ports based on the SRS resource set identifier includes: determining a first SRS resource set based on the SRS resource set identifier; and determining the quantity m of SRS ports based on the first SRS resource set.

Optionally, the first report configuration is used to configure how the terminal device generates the first report or configure content included in the first report. In other words, the terminal device may determine the first report based on the first report configuration.

In some possible implementations, the first report configuration is used to configure correlation information between the channel information corresponding to the port determined based on the first SRS resource set identified by the SRS resource set identifier and channel information corresponding to Q ports determined based on the first report configuration.

In the foregoing solution, the first report configuration may include indication information indicating Q. The terminal device may determine that the terminal device supports the Q ports. The terminal device can determine the quantity m of SRS ports based on the first SRS resource set identified by the SRS resource set identifier in the first report configuration. The terminal device may determine the m ports from the Q ports and map the m ports to the M SRS ports. The first report may include the correlation information between the Q ports and the m ports.

In some possible implementations, the first report configuration is used to configure correlation information between the channel information corresponding to the port determined based on the first SRS resource set identified by the SRS resource set identifier and channel information corresponding to a port determined based on the capability of the terminal device.

In the foregoing solution, the terminal device may determine, based on the capability of the terminal device, that a quantity of ports supported by the terminal device is Q. The terminal device may determine the quantity m of SRS ports based on the first SRS resource set identified by the SRS resource set identifier in the first report configuration. The terminal device may determine the m ports from the Q ports and map the m ports to the m SRS ports. The first report may include the correlation information between the channel information corresponding to the Q ports and the channel information corresponding to the m ports.

In some possible implementation, the correlation information configured in the first report configuration includes at least one of the following: an autocorrelation matrix of the channel information corresponding to the port determined based on the first SRS resource set identified by the SRS resource set identifier, a cross-correlation matrix of the channel information corresponding to the port determined based on the first SRS resource set identified by the SRS resource set identifier and the channel information corresponding to the Q ports determined based on the first report configuration, a cross-correlation matrix of the channel information corresponding to the port determined based on the first SRS resource set identified by the SRS resource set identifier and the channel information corresponding to the port determined based on the capability of the terminal device, a cross-correlation matrix of the channel information corresponding to the port determined based on the first SRS resource set identified by the SRS resource set identifier and channel information corresponding to Q-m ports, and a minimum mean square error MMSE extrapolation coefficient determined by the autocorrelation matrix and the cross-correlation matrix.

The first report includes at least one of the following: a first autocorrelation matrix of the channel information corresponding to the m ports, a first cross-correlation matrix of the channel information corresponding to the m ports and the channel information corresponding to the Q ports, a second cross-correlation matrix of the channel information corresponding to the m ports and the channel information corresponding to the Q-m ports, a first MMSE extrapolation coefficient determined based on the first autocorrelation matrix and the first cross-correlation matrix, and a second MMSE extrapolation coefficient determined based on the first autocorrelation matrix and the second cross-correlation matrix, where the Q-m ports are ports other than the m ports in the Q ports, and the m SRS ports are used to measure the channel information corresponding to the m ports.

Optionally, the correlation information configured in the first report configuration includes the autocorrelation matrix of the channel information corresponding to the port determined based on the first SRS resource set identified by the SRS resource set identifier, and the first report includes the first autocorrelation matrix of the channel information corresponding to the m ports. Optionally, the correlation information configured in the first report configuration includes the cross-correlation matrix of the channel information corresponding to the port determined based on the first SRS resource set identified by the SRS resource set identifier and the channel information corresponding to the Q ports determined based on the first report configuration, and the first report includes the second cross-correlation matrix of the channel information corresponding to the m ports and the channel information corresponding to the Q-m ports. Optionally, the correlation information configured in the first report configuration includes the cross-correlation matrix of the channel information corresponding to the port determined based on the first SRS resource set identified by the SRS resource set identifier and the channel information corresponding to the port determined based on the capability of the terminal device, and the first report includes the second cross-correlation matrix of the channel information corresponding to the m ports and the channel information corresponding to the Q-m ports. Optionally, the correlation information configured in the first report configuration includes the cross-correlation matrix of the channel information corresponding to the port determined based on the first SRS resource set identified by the SRS resource set identifier and the channel information corresponding to the Q-m ports, and the first report includes the second cross-correlation matrix of the channel information corresponding to the m ports and the channel information corresponding to the Q-m ports. Optionally, the correlation information configured in the first report configuration includes the MMSE extrapolation coefficient determined by the autocorrelation matrix and the cross-correlation matrix, and the first report includes the first MMSE extrapolation coefficient determined based on the first autocorrelation matrix and the first cross-correlation matrix, and/or the second MMSE extrapolation coefficient determined based on the first autocorrelation matrix and the second cross-correlation matrix.

In some possible implementations, the communication method further includes: receiving a first downlink reference signal from the network device; and determining the first report based on the first downlink reference signal.

In the foregoing solution, the terminal device may determine the first report based on the first downlink reference signal, for example, determine at least one of the first autocorrelation matrix, the first cross-correlation matrix, the second cross-correlation matrix, the first MMSE extrapolation coefficient, or the second MMSE extrapolation coefficient in the first report.

Optionally, the first downlink reference signal may be a first CSI-RS.

In some possible implementations, the first report configuration is used to configure the terminal device to indicate the port determined based on the first SRS resource set identified by the SRS resource set identifier, the first report includes first indication information, and the first indication information indicates the m ports.

In the foregoing solution, the first report configuration may be used to configure the terminal device to indicate a determined port. After the terminal device determines the m ports, the first report sent by the terminal device includes the first indication information, and the first indication information indicates the m ports. In this way, the network device may determine, based on the first indication information, ports of the terminal device that are used to send the SRSs, so that the channel information of the m ports can be determined based on the received SRSs.

Optionally, the first indication information may directly indicate the m ports, or may indirectly indicate the m ports.

In some possible implementations, the first indication information indicates an index value of each of the m ports. Optionally, Q index values of the Q ports are respectively 0, 1, 2, ..., and Q-1, and the index value of each of the m ports is a value in 0, 1, 2, ..., and Q-1.

In some possible implementations, the first indication information is a bitmap with a length of Q bits, the Q ports are in one-to-one correspondence with the Q bits, a value of a bit corresponding to each of the m ports in the bitmap is a first value, a value of a bit corresponding to each of the Q-m ports in the bitmap is a second value, the first value is different from the second value, and the Q-m ports are ports other than the m ports in the Q ports.

In some possible implementations, the first indication information indicates first index values of the m ports in a first table, and different port combinations correspond to different index values in the first table.

Optionally, different values of Q correspond to different tables, different values of m may also correspond to different tables, or different values of Q and different values of m may also correspond to different tables.

In some possible implementations, the communication method further includes: determining a second report configuration; determining the SRS resource set identifier based on the second report configuration; and sending a second report, where the second report is determined based on the second report configuration, a second downlink reference signal sent by the network device, and the first report.

Optionally, the second report configuration may include the SRS resource set identifier. Optionally, the SRS resource set identifier in the first report configuration is the same as that in the second report configuration, and the first report configuration is associated with the second report configuration by using the same SRS resource set identifier. In other words, the second report configuration sent by the network device is used to configure whether the first report corresponding to the first report configuration associated with the same SRS resource set identifier is valid.

In some possible implementations, the communication method further includes: determining first channel information of the Q ports based on the second downlink reference signal received from the network device; determining second channel information of the m ports based on the second downlink reference signal; and determining third channel information of the Q ports based on the first report and the second channel information.

Optionally, the first channel information may be complete channel information or actual channel information of the Q ports. The third channel information may be channel information of the Q ports that is derived by the terminal device based on the first report and the second channel information.

In some possible implementations, if a degree of correlation between the first channel information and the third channel information is less than or equal to a preset degree, the sent second report includes a third value; or if the degree of correlation between the first channel information and the third channel information is greater than the preset degree, the sent second report includes a fourth value, where the third value is different from the fourth value.

Optionally, the third value indicates that the correlation information between the m ports and the Q ports in the first report is invalid or ineffective. If the degree of correlation between the first channel information and the third channel information is greater than the preset degree, the sent second report includes the fourth value. The fourth value indicates that the correlation information between the m ports and the Q ports in the first report is valid.

In some possible implementations, the second report includes indication information indicating a degree of correlation between the first channel information and the third channel information. In this way, the network device may determine, based on the indication information indicating the degree of correlation between the first channel information and the third channel information in the second report, whether the degree of correlation is less than or equal to the preset degree. If the network device determines that the degree of correlation is less than or equal to the preset degree, the network device may learn that the correlation information between the channel information corresponding to the m ports and the channel information corresponding to the Q ports in the first report is invalid or ineffective.

In some possible implementations, if a degree of correlation between the first channel information and the third channel information is less than or equal to a preset degree, the sent second report includes a bitmap with a length of Q bits. A value of each of the Q bits is the second value. In other words, if the first channel information is not related to the third channel information, the second report may include the bitmap with a length of Q bits, a value of each of the Q bits is the second value, and a port is not indicated. In this way, the network device can learn, by using the special values of the Q bits, that the correlation information in the first report is invalid. If the degree of correlation between the first channel information and the third channel information is greater than the preset degree, the sent second report includes a bitmap with a length of Q bits. The Q ports are in one-to-one correspondence with the Q bits, a value of a bit corresponding to each of the m ports in the bitmap is the first value, a value of a bit corresponding to each of the Q-m ports in the bitmap is the second value, the first value is different from the second value, and the Q-m ports are ports other than the m ports in the Q ports. In other words, when the first channel information is related to the third channel information, the bitmap with a length of Q bits that is sent by the terminal device may indicate the m ports.

In some possible implementations, if a degree of correlation between the first channel information and the third channel information is less than or equal to a preset degree, second indication information included in the sent second report indicates a fifth value. For example, the fifth value is -1. The fifth value is different from an index value of any one of the Q ports. In other words, if the first channel information is not related to the third channel information, the second report may include the second indication information, and an index value indicated by the second indication information is not an index value of a port, but the fifth value. In this way, the network device can learn, by using the special value, that the correlation information in the first report is invalid. If the degree of correlation between the first channel information and the third channel information is greater than the preset degree, the first indication information included in the sent second report indicates the index value of each of the m ports. In other words, when the first channel information is related to the third channel information, the first indication information sent by the terminal device may indicate the m ports.

In some possible implementations, if a degree of correlation between the first channel information and the third channel information is less than or equal to a preset degree, second indication information included in the sent second report indicates a second index value in the first table. In other words, if the first channel information is not related to the third channel information, the second report may include the second indication information, and the second indication information indicates the second index value. The first table includes index values of a first type, different index values in the index values of the first type correspond to different port combinations, and the second index value is different from any one of the index values of the first type. In this way, in a manner of indicating the special second index value, the network device can learn that the correlation information between the channel information corresponding to the m ports and the channel information corresponding to the Q ports in the first report is invalid. If the degree of correlation between the first channel information and the third channel information is greater than the preset degree, the first indication information included in the sent second report indicates the first index values of the m ports in the first table, and the index values of the first type in the first table include the first index value. In other words, when the first channel information is related to the third channel information, the first indication information sent by the terminal device may indicate the first index values of the m ports in the first table.

In some possible implementations, that the degree of correlation between the first channel information and the third channel information is less than or equal to the preset degree specifically includes: correlation between P eigenvectors corresponding to P maximum eigenvalues of a matrix corresponding to the first channel information and P eigenvectors corresponding to P maximum eigenvalues of a matrix corresponding to the third channel information is less than or equal to a first threshold, where P is a positive integer; or includes: correlation between the matrix corresponding to the first channel information and the matrix corresponding to the third channel information is less than or equal to a second threshold; or includes: a normalized mean square error NMSE of the matrix corresponding to the first channel information and the matrix corresponding to the third channel information is greater than or equal to a third threshold.

That the degree of correlation between the first channel information and the third channel information is greater than the preset degree is specifically: the correlation between the P eigenvectors corresponding to the P maximum eigenvalues of the matrix corresponding to the first channel information and the P eigenvectors corresponding to the P maximum eigenvalues of the matrix corresponding to the third channel information is greater than the first threshold; or includes: the correlation between the matrix corresponding to the first channel information and the matrix corresponding to the third channel information is greater than the second threshold; or is: the normalized mean square error NMSE of the matrix corresponding to the first channel information and the matrix corresponding to the third channel information is less than the third threshold.

According to a second aspect, a communication method is provided, is applied to a network device, and includes: sending a first report configuration; and receiving the first report, where the first report is determined based on the first report configuration, m SRS ports, and Q ports, m is determined based on an SRS resource set identifier, the SRS resource set identifier is determined based on the first report configuration, Q is determined based on the first report configuration and/or a capability of a terminal device, m and Q are positive integers, and Q is greater than or equal to m.

In the foregoing solution, the network device may send the first report configuration, and the terminal device may determine the first report. The first report is determined based on the first report configuration, the m SRS ports, and the Q ports. Q is greater than m. In this way, the terminal device may send SRSs through the m ports, to avoid occupying a large quantity of time-frequency resources required for sending SRSs through the Q ports. In addition, the network device may determine channel information of the Q ports based on the first report and channel information (for example, fourth channel information) of the m ports, estimate an uplink channel based on the channel information of the Q ports, and estimate a downlink channel based on the uplink channel, so that a precoding matrix used for downlink transmission can be determined based on the estimated downlink channel, to improve a downlink precoding capability.

Optionally, m is determined based on a first SRS resource set, and the first SRS resource set is determined based on the SRS resource set identifier.

In some possible implementations, the first report configuration is used to configure correlation information between the channel information corresponding to the port determined based on the first SRS resource set identified by the SRS resource set identifier and channel information corresponding to Q ports determined based on the first report configuration; or the first report configuration is used to configure correlation information between the channel information corresponding to the port determined based on the first SRS resource set identified by the SRS resource set identifier and channel information corresponding to a port determined based on the capability of the terminal device.

In some possible implementation, the correlation information configured in the first report configuration includes at least one of the following: an autocorrelation matrix of the channel information corresponding to the port determined based on the first SRS resource set identified by the SRS resource set identifier, a cross-correlation matrix of the channel information corresponding to the port determined based on the first SRS resource set identified by the SRS resource set identifier and the channel information corresponding to the Q ports determined based on the first report configuration, a cross-correlation matrix of the channel information corresponding to the port determined based on the first SRS resource set identified by the SRS resource set identifier and the channel information corresponding to the port determined based on the capability of the terminal device, a cross-correlation matrix of the channel information corresponding to the port determined based on the first SRS resource set identified by the SRS resource set identifier and channel information corresponding to Q-m ports, and an MMSE extrapolation coefficient determined by the autocorrelation matrix and the cross-correlation matrix.

The first report includes at least one of the following: a first autocorrelation matrix of the channel information corresponding to the m ports, a first cross-correlation matrix of the channel information corresponding to the m ports and the channel information corresponding to the Q ports, a second cross-correlation matrix of the channel information corresponding to the m ports and the channel information corresponding to the Q-m ports, a first MMSE extrapolation coefficient determined based on the first autocorrelation matrix and the first cross-correlation matrix, and a second MMSE extrapolation coefficient determined based on the first autocorrelation matrix and the second cross-correlation matrix, where the Q-m ports are ports other than the m ports in the Q ports, and the m SRS ports are used to measure the channel information corresponding to the m ports.

In some possible implementations, the first report configuration is used to configure the terminal device to indicate the port determined based on the first SRS resource set identified by the SRS resource set identifier, the first report includes first indication information, and the first indication information indicates the m ports.

In some possible implementations, the first indication information indicates an index value of each of the m ports; the first indication information is a bitmap with a length of Q bits, the Q ports are in one-to-one correspondence with the Q bits, a value of a bit corresponding to each of the m ports in the bitmap is a first value, a value of a bit corresponding to each of the Q-m ports in the bitmap is a second value, the first value is different from the second value, and the Q-m ports are ports other than the m ports in the Q ports; or the first indication information indicates first index values of the m ports in a first table, and different port combinations correspond to different index values in the first table.

In some possible implementations, the communication method further includes: sending a second report configuration; where the second report configuration includes the SRS resource set identifier; and receiving a second report, where the second report is determined based on the second report configuration, a second downlink reference signal sent by the network device, and the first report.

In some possible implementations, the second report includes a third value, indicating that a degree of correlation between first channel information and third channel information is less than or equal to a preset degree; or the second report includes a fourth value, indicating that the degree of correlation between the first channel information and the third channel information is greater than the preset degree.

The third value is different from the fourth value, the first channel information is determined by the terminal device based on the second downlink reference signal, the third channel information is determined by the terminal device based on second channel information of the m ports and the first report, and the second channel information of the m ports is determined based on the second downlink reference signal.

In some possible implementations, the second report includes indication information indicating a degree of correlation between first channel information and third channel information. The first channel information is determined by the terminal device based on the second downlink reference signal, the third channel information is determined by the terminal device based on second channel information of the m ports and the first report, and the second channel information of the m ports is determined based on the second downlink reference signal.

In some possible implementations, the second report includes a bitmap with a length of Q bits, and a value of each of the Q bits is the second value, indicating that a degree of correlation between first channel information and third channel information is less than or equal to a preset degree; or
the second report includes a bitmap with a length of Q bits, a value of a bit corresponding to each of the m ports in the bitmap is the first value, and a value of a bit corresponding to each of the Q-m ports in the bitmap is the second value, indicating that the degree of correlation between the first channel information and the third channel information is greater than the preset degree. The Q ports are in one-to-one correspondence with the Q bits, the first value is different from the second value, and the Q-m ports are ports other than the m ports in the Q ports.

The first channel information is determined by the terminal device based on the second downlink reference signal, the third channel information is determined by the terminal device based on second channel information of the m ports and the first report, and the second channel information of the m ports is determined based on the second downlink reference signal.

In some possible implementations, second indication information included in the second report indicates a fifth value, indicating that a degree of correlation between first channel information and third channel information is less than or equal to a preset degree, where the fifth value is different from an index value of any one of the Q ports; or
the first indication information included in the second report indicates the index value of each of the m ports, indicating that the degree of correlation between the first channel information and the third channel information is greater than the preset degree.

The first channel information is determined by the terminal device based on the second downlink reference signal, the third channel information is determined by the terminal device based on second channel information of the m ports and the first report, and the second channel information of the m ports is determined based on the second downlink reference signal.

In some possible implementations, second indication information included in the second report indicates a second index value in the first table, indicating that a degree of correlation between first channel information and third channel information is less than or equal to a preset degree; or
the first indication information included in the second report indicates the first index values of the m ports in the first table, indicating that the degree of correlation between the first channel information and the third channel information is greater than the preset degree. The first table includes index values of a first type, the index values of the first type include the first index value, different index values in the index values of the first type correspond to different port combinations, and the second index value is different from any one of the index values of the first type.

The first channel information is determined by the terminal device based on the second downlink reference signal, the third channel information is determined by the terminal device based on second channel information of the m ports and the first report, and the second channel information of the m ports is determined based on the second downlink reference signal.

In some possible implementations, that the degree of correlation between the first channel information and the third channel information is less than or equal to the preset degree specifically includes: correlation between P eigenvectors corresponding to P maximum eigenvalues of a matrix corresponding to the first channel information and P eigenvectors corresponding to P maximum eigenvalues of a matrix corresponding to the third channel information is less than or equal to a first threshold, where P is a positive integer; or includes: correlation between the matrix corresponding to the first channel information and the matrix corresponding to the third channel information is less than or equal to a second threshold; or includes: a normalized mean square error NMSE of the matrix corresponding to the first channel information and the matrix corresponding to the third channel information is greater than or equal to a third threshold.

That the degree of correlation between the first channel information and the third channel information is greater than the preset degree is specifically: the correlation between the P eigenvectors corresponding to the P maximum eigenvalues of the matrix corresponding to the first channel information and the P eigenvectors corresponding to the P maximum eigenvalues of the matrix corresponding to the third channel information is greater than the first threshold; or is: the correlation between the matrix corresponding to the first channel information and the matrix corresponding to the third channel information is greater than the second threshold; or is: the normalized mean square error NMSE of the matrix corresponding to the first channel information and the matrix corresponding to the third channel information is less than the third threshold.

For the second aspect, refer to the descriptions of the first aspect. To avoid repetition, details are not described.

According to a third aspect, an embodiment of this application provides a communication apparatus. The communication apparatus has a function of implementing any one of the foregoing aspects. The function may be implemented by hardware, or may be implemented by executing corresponding software by hardware. The hardware or the software includes one or more modules or units corresponding to the foregoing functions, for example, a transceiver module or unit, a processing module or unit, or an obtaining module or unit.

According to a fourth aspect, an embodiment of this application provides a communication apparatus, including a memory and a processor. The memory is configured to store a computer program, and the processor is configured to enable, when invoking the computer program, the communication apparatus to perform the method in any one of the foregoing aspects.

According to a fifth aspect, an embodiment of this application provides a chip system, and the chip system includes a processor. The processor is coupled to a memory, and the processor executes a computer program stored in the memory, to implement the method in any one of the foregoing aspects.

The chip system may be a single chip or a chip module including a plurality of chips.

According to a sixth aspect, an embodiment of this application provides a computer-readable storage medium. The computer-readable storage medium stores a computer program, and when the computer program is executed by a processor, the method in any one of the foregoing aspects is implemented.

According to a seventh aspect, an embodiment of this application provides a computer program product. When the computer program product runs on a communication apparatus, the communication apparatus is enabled to perform the method in any one of the foregoing aspects.

It may be understood that, for beneficial effect of the third aspect to the seventh aspect, refer to related descriptions in the first aspect and the second aspect. Details are not described herein again.

### BRIEF DESCRIPTION OF DRAWINGS

FIG. 1 is a diagram of a communication system according to an embodiment of this application;
FIG. 2 is a diagram of a communication method according to an embodiment of this application;
FIG. 3 is a diagram of another communication method according to an embodiment of this application;
FIG. 4 is a block diagram of a communication apparatus according to an embodiment of this application; and
FIG. 5 is a block diagram of another communication apparatus according to an embodiment of this application.

### DESCRIPTION OF EMBODIMENTS

The following describes the technical solutions in embodiments of this application with reference to the accompanying drawings in embodiments of this application.

It should be understood that division into manners, cases, categories, and embodiments in embodiments of this application is merely for ease of description, and should not constitute a particular limitation. Features in various manners, categories, cases, and embodiments may be combined without contradiction.

It should be further understood that "first", "second", and "third" in embodiments of this application are merely for distinguishing, and should not constitute any limitation on this application. It should be further understood that, in embodiments of this application, sequence numbers of processes do not mean execution sequences. The execution sequences of the processes should be determined based on functions and internal logic of the processes, and shall not constitute any limitation on implementation processes of embodiments of this application.

In embodiments of this application, unless otherwise specified, a quantity of nouns indicates "a singular noun or a plural noun", that is, "one or more". "At least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between the associated objects. For example, A/B indicates A or B. "At least one of the following items (pieces)" or a similar expression thereof means any combination of these items, including any combination of singular items (pieces) or plural items (pieces). For example, at least one of a, b, or c indicates a, b, c, a and b, a and c, b and c, or a, b, and c, where a, b, and c may be singular or plural.

In addition, the terms "including", "having", or any other variant thereof in descriptions of this application are intended to cover a non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device.

It should be noted that, in embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. To be precise, use of the word such as "example" or "for example" is intended to present a relative concept in a specific manner.

A method and an apparatus provided in embodiments of this application are based on a same or similar technical concept. Because problem resolving principles of the method and the apparatus are similar, mutual reference may be made to implementations of the apparatus and the method. Repeated descriptions are not described.

The technical solutions in embodiments of this application may be applied to various communication systems, for example, a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system or new radio (new radio, NR), or 6G.

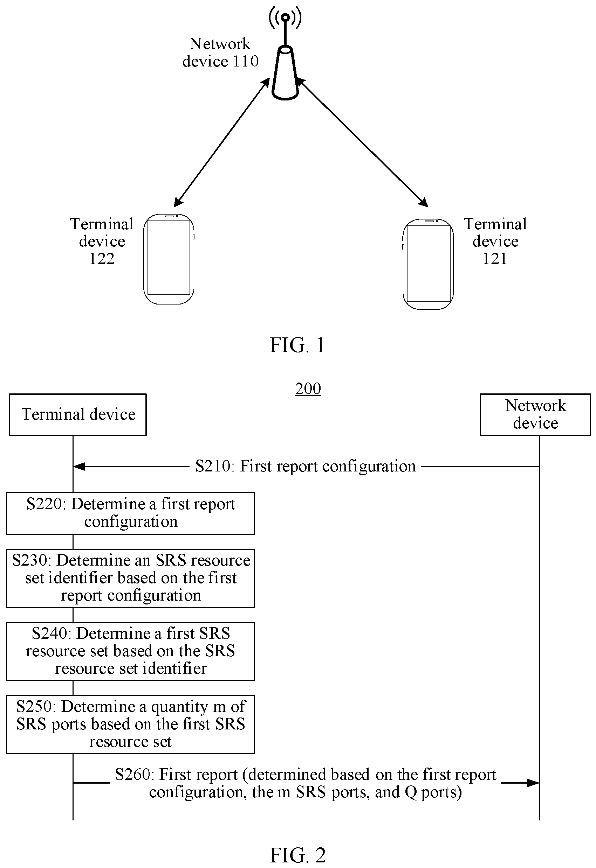

FIG. 1 is a diagram of a communication system to which embodiments of this application are applicable. As shown in FIG. 1, the wireless communication system may include a network device 110 and one or more terminal devices (for example, a terminal device 121 and a terminal device 122 shown in FIG. 1) that communicate with each other. When the network device 110 sends a signal, the network device 110 is a transmitting end, and the terminal device 121 or the terminal device 122 is a receiving end. On the contrary, when the terminal device 121 or the terminal device 122 sends a signal, the terminal device 121 or the terminal device 122 is a transmitting end, and the network device 110 is a receiving end. A link used by the terminal device 121 or the terminal device 122 to send data to the network device 110 is referred to as an uplink (uplink), and a link used by the terminal device 121 or the terminal device 122 to receive data sent by the network device 110 is referred to as a downlink (downlink). The communication system in FIG. 1 may include more than two terminal devices. In FIG. 1, the terminal device 121 and the terminal device 122 are used as an example for description. Optionally, the terminal device 121 and the terminal device 122 may directly communicate with each other. For example, direct communication between terminal devices may be implemented by using a sidelink (sidelink, SL) or the like. In addition, the terminal device 121 or the terminal device 122 may alternatively separately or simultaneously communicate with the network device 110.

In embodiments of this application, the network device 110 may be a device in a wireless network, and the network device 110 may also be referred to as a network apparatus. For example, the network device 110 may be a radio access network (radio access network, RAN) node that connects the terminal device to the wireless network, and may also be referred to as an access network device. The network device 110 includes but is not limited to: an evolved NodeB (evolved NodeB, eNB), a radio network controller (radio network controller, RNC), a NodeB (NodeB, NB), a base station controller (base station controller, BSC), a base transceiver station (base transceiver station, BTS), a home NodeB (for example, a home evolved NodeB, or a home NodeB, HNB), a baseband unit (baseband unit, BBU), an access point (access point, AP) in a wireless fidelity (wireless fidelity, Wi-Fi) system, a radio relay node, a radio backhaul node, and a transmission point (transmission point, TP), a reception point (reception point, RP), a transmission and reception point (transmission and reception point, TRP), or the like, or may be a network device in a 5G mobile communication system or a network device in another future network system, for example, a next generation NodeB (next generation NodeB, gNB), a transmission reception point (transmission reception point, TRP), or a TP in an NR system, or one antenna panel or one group of antenna panels (including a plurality of antenna panels) of a base station in the 5G mobile communication system. Alternatively, the network device 110 may be a network node that forms a gNB or a transmission point, for example, a BBU or a distributed unit (distributed unit, DU).

In some deployments, the network device 110 may include a central unit (central unit, CU) and a DU. The network device 110 may further include an active antenna unit (active antenna unit, AAU). The CU implements a part of functions of the gNB, and the DU implements a part of the functions of the gNB. For example, the CU is responsible for processing a non-real-time protocol and service, and implements functions of a radio resource control (radio resource control, RRC) layer. The DU is responsible for processing a physical layer protocol and a real-time service, and implementing functions of a radio link control (radio link control, RLC) layer, a media access control (media access control, MAC) layer, and a physical (physical, PHY) layer. In some deployments, the CU may be further divided into a central unit control plane (CU-CP) node and a central unit user plane (CU-UP) node. The CU-CP is responsible for a control plane function, and the CU-UP is responsible for a user plane function.

In embodiments of this application, the terminal device 121 or the terminal device 122 may be user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. The terminal device may alternatively be a terminal in a form of a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a compute device or another processing device connected to a wireless modem, a vehicle-mounted device, a handheld device, a wearable device, a compute device, a portable device, a vehicle-mounted device, or the like, a smartphone, smart glasses, a terminal device in a 5G network, a terminal device in a future evolved public land mobile communication network (public land mobile network, PLMN), or the like. This is not limited in embodiments of this application.

For ease of description, device numbers are omitted in the following embodiments. For example, a "terminal device" represents the "terminal device 121 or terminal device 122", and a "network device" represents the "network device 110".

It should be understood that FIG. 1 shows the terminal device 121 and the terminal device 122 as examples merely for ease of understanding, but this should not constitute any limitation on this application. The wireless communication system may further include more network devices, or may include more or fewer terminal devices. This is not limited in this application.

First, some concepts in embodiments of this application are described.

### 1. SRS, SRS resource, and SRS port

An SRS is an uplink reference signal sent by a terminal device to a network device (for example, a base station). The network device obtains an uplink (uplink, UL) channel of the terminal device based on the SRS sent by the terminal device. Alternatively, the network device obtains a downlink (downlink, DL) channel of the terminal device based on channel reciprocity, to perform data scheduling (for example, precoding corresponding to downlink data, a modulation and coding scheme (modulation and coding scheme, MCS) corresponding to the downlink data, and a scheduling time-frequency resource corresponding to the downlink data) on the terminal device based on the DL channel. User equipment (user equipment, UE) and/or a user in the following descriptions may be considered as a terminal device. The foregoing SRS is merely an example, and should not constitute any limitation on this application. This application does not exclude a possibility that another reference signal is defined in a future protocol to implement a same or similar function, and does not exclude a possibility that another reference signal is defined in a future protocol to implement different functions.

An SRS resource set is configured by the network device (for example, a base station), and one SRS resource set may correspond to a time-frequency resource and a code domain resource. One code domain resource corresponds to one SRS sequence, and is also referred to as an SRS sequence resource. One SRS resource set may correspond to one or more SRS ports. One or more SRS ports may correspond to a same time-frequency resource, and different SRS ports correspond to different SRS sequences, or different SRS ports correspond to different time-frequency resources. In an implementation, the SRS resource set is semi-statically configured by the network device by using a higher-layer parameter. One SRS port corresponds to one group of time-frequency resources and one SRS sequence. A terminal device sends a corresponding SRS sequence on a time-frequency resource corresponding to one or more ports that correspond to one SRS resource. The SRS sequence may also be referred to as an SRS transmit symbol sequence, an SRS transmit symbol vector, or the like. A name of the SRS sequence is not limited in embodiments of this application. An SRS resource set identifier is used to identify an SRS resource set, for example, identify a first SRS resource set.

SRS port: An SRS port is also referred to as a port or an antenna port. In the following embodiments, a port represents an SRS port. The SRS port is used to carry an SRS. One SRS port corresponds to one SRS, or one SRS port corresponds to one SRS sequence. Different SRS ports may be multiplexed in at least one of the following modes: a code division mode, a frequency division mode, a time division mode, or a space division mode. Usually, each SRS port occupies different time domain, frequency domain, or code domain resources, to reduce mutual interference or ensure orthogonality between ports. Each SRS port corresponds to a physical antenna or a virtual antenna of a terminal device.

In a time division duplexing (time division duplexing, TDD) mode, on uplink and downlink channels, signals are transmitted on a same frequency domain resource and different time domain resources. Within a short period of time (for example, coherence time of channel propagation), it may be considered that channels through which the signals on the uplink channel and the downlink channel pass are the same, and the uplink and downlink channels may be equivalently obtained from each other. This is reciprocity between the uplink and downlink channels. Based on the reciprocity between the uplink and downlink channels, the network device may measure the uplink channel based on an uplink reference signal such as a sounding reference signal (sounding reference signal, SRS), and may estimate the downlink channel based on the uplink channel, to determine a precoding matrix used for downlink transmission. However, because a time-frequency resource allocated to the SRS is fixed, as a quantity of terminal devices and a quantity of antennas of the terminal devices in a network increase, a problem of insufficient SRS resources occurs. Consequently, channel estimation performance is affected, a downlink precoding capability is deteriorated, and finally a network throughput is reduced.

In embodiments of this application, a terminal device may determine an SRS resource set identifier based on a determined first report configuration, may determine a first SRS resource set based on the SRS resource set identifier, and determine a quantity m of SRS ports based on the first SRS resource set. The terminal device may send a first report. The first report is determined based on the first report configuration, the m SRS ports, and Q ports, and Q is greater than m. In this way, the terminal device may send SRSs through the m ports, to avoid occupying a large quantity of time-frequency resources required for sending SRSs through the Q ports. In addition, a network device may determine channel information of the Q ports based on the first report and channel information of the m ports, estimate an uplink channel based on the channel information of the Q ports, and estimate a downlink channel based on the uplink channel, so that a precoding matrix used for downlink transmission can be determined based on the estimated downlink channel, to improve a downlink precoding capability.

A communication method 200 according to an embodiment of this application is described below with reference to FIG. 2, and includes the following steps.

S210: A network device sends a first report configuration, and a terminal device receives the first report configuration from the network device.

Optionally, the first report configuration may include an SRS resource set identifier (SRS-ResourceSetId), and the SRS resource set identifier is used to identify a first SRS resource set.

Optionally, the first report configuration may include indication information indicating Q, and the terminal device may determine Q based on the indication information indicating Q. Optionally, the first report configuration is used to configure correlation information between channel information corresponding to a port determined based on the first SRS resource set identified by the SRS resource set identifier and channel information corresponding to Q ports determined based on the first report configuration. Optionally, Q is a total quantity of ports supported by the terminal device. Q is a positive integer.

Optionally, the first report configuration is used to configure correlation information between channel information corresponding to a port determined based on the first SRS resource set identified by the SRS resource set identifier and channel information corresponding to a port determined based on a capability of the terminal device.

For example, the first report configuration is:

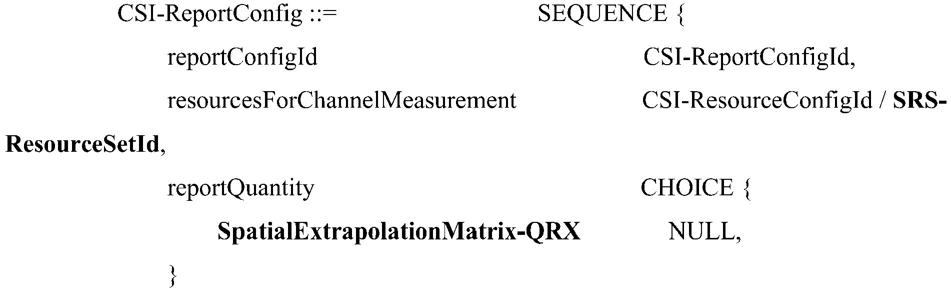

SRS-ResourceSetId is the SRS resource set identifier. SpatialExtrapolationMatrix-QRX is the correlation information that is configured in the first report configuration and that is used to send the channel information corresponding to the port determined based on the first SRS resource set identified by the SRS resource set identifier and the channel information corresponding to the port determined based on the capability of the terminal device; or SpatialExtrapolationMatrix-QRX is the correlation information that is configured in the first report configuration and that is used to send the channel information corresponding to the port determined based on the first SRS resource set identified by the SRS resource set identifier and the channel information corresponding to the Q ports determined based on the first report configuration. The terminal device may determine the first SRS resource set based on SRS-ResourceSetId corresponding to resourcesForChannelMeasurement in the first report configuration.

For another example, the first report configuration may be:

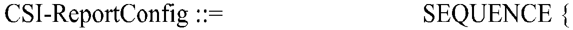

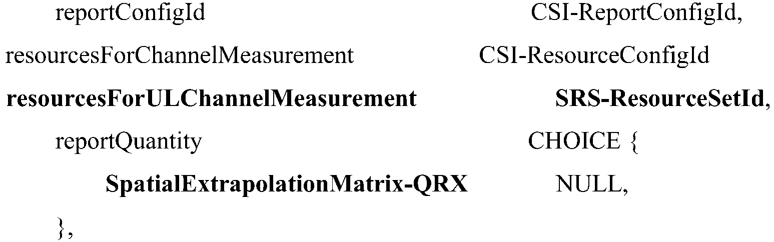

SRS-ResourceSetId is the SRS resource set identifier. SpatialExtrapolationMatrix-QRX is the correlation information that is configured in the first report configuration and that is used to send the channel information corresponding to the port determined based on the first SRS resource set identified by the SRS resource set identifier and the channel information corresponding to the port determined based on the capability of the terminal device; or SpatialExtrapolationMatrix-QRX is the correlation information that is configured in the first report configuration and that is used to send the channel information corresponding to the port determined based on the first SRS resource set identified by the SRS resource set identifier and the channel information corresponding to the Q ports determined based on the first report configuration. The terminal device may determine the first SRS resource set based on SRS-ResourceSetId corresponding to resourcesForULChannelMeasurement in the first report configuration.

S220: The terminal device determines a first report configuration.

In S220, the terminal device may determine the first report configuration based on the first report configuration received in S210.

S230: The terminal device determines the SRS resource set identifier based on the first report configuration.

Optionally, the terminal device may determine the SRS resource set identifier based on the SRS resource set identifier included in the first report configuration.

Optionally, the terminal device may determine a quantity m of SRS ports based on the SRS resource set identifier, where m is a positive integer, and m is less than Q.

Optionally, that the terminal device may determine the quantity m of SRS ports based on the SRS resource set identifier includes: S240: The terminal device determines the first SRS resource set based on the SRS resource set identifier. S250: The terminal device determines the quantity m of SRS ports based on the first SRS resource set.

S240: The terminal device determines the first SRS resource set based on the SRS resource set identifier.

Optionally, the terminal device may determine, based on the SRS resource set identifier, the first SRS resource set identified by the SRS resource set identifier. Optionally, a quantity of SRS ports corresponding to the first SRS resource set is m. Before S210, the network device may configure, for the terminal device, the quantity m of SRS ports corresponding to the first SRS resource set. Optionally, the network device may further configure, for the terminal device, a time-frequency resource and a code domain resource that correspond to the first SRS resource set.

Optionally, the first SRS resource set is an nTmR SRS resource set, indicating that the first SRS resource set corresponds to n transmit ports and m receive ports. In this way, the terminal device may estimate an uplink channel by using SRSs sent through the m ports, and the estimated uplink channel may be used to estimate channel information corresponding to the m downlink receive ports.

S250: The terminal device determines the quantity m of SRS ports based on the first SRS resource set.

In other words, in S250, the terminal device can determine the quantity m of SRS ports corresponding to the first SRS resource set, so that the terminal device can determine the m SRS ports.

Optionally, the m SRS ports are used to obtain channel information of m ports of the terminal device through measurement. In other words, a total quantity of ports supported by the terminal device is Q. When the terminal device determines that the quantity of SRS ports corresponding to the first SRS resource set is m, the terminal device needs to determine the m ports from the Q ports and map the m ports to the m SRS ports. In other words, the channel information of the m ports may be obtained by measurement by using SRSs sent through the m SRS ports.

S260: The terminal device sends a first report, and the network device receives the first report, where the first report is determined based on the first report configuration, the m SRS ports, and the Q ports, and Q is determined based on the first report configuration or the capability of the terminal device.

Optionally, the first report corresponds to the first report configuration. In other words, the terminal device needs to send the first report to the network device based on the first report configuration. In other words, the first report configuration is used to configure how the terminal device generates the first report or content included in the to-be-sent first report.

Optionally, the first report includes the correlation information between the channel information corresponding to the m ports and the channel information corresponding to the Q ports. Optionally, the first report is used to configure the terminal device to report the correlation information between the channel information corresponding to the m ports and the channel information corresponding to the Q ports, where Q is a quantity of ports supported by the terminal device.

Optionally, the terminal device may receive a first downlink reference signal from the network device, and may determine, based on the first downlink reference signal, the correlation information between the channel information corresponding to the m ports and the channel information corresponding to the Q ports. The first report may include the correlation information between the channel information corresponding to the m ports and the channel information corresponding to the Q ports. Optionally, the first downlink reference signal may be a first channel state information reference signal (channel state information reference signal, CSI-RS). Optionally, the network device may send the first downlink reference signal on a first non-zero power (no zero power, NZP)-CSI-RS resource set, and the terminal device may receive the first downlink reference signal on the first NZP-CSI-RS resource set.

The following describes the first report configuration and the first report in two cases.

Case 1: The first report configuration is used to configure the correlation information between the channel information corresponding to the port determined based on the first SRS resource set identified by the SRS resource set identifier and the channel information corresponding to the Q ports determined based on the first report configuration. Optionally, Q is the total quantity of ports supported by the terminal device.

In Case 1, the first report configuration may include the indication information indicating Q. That is, the first report configuration may include indication information indicating the total quantity Q of ports supported by the terminal device. The terminal device may determine the first SRS resource set based on the SRS resource set identifier in the first report configuration, and determine the quantity m of SRS ports based on the first SRS resource set. The terminal device may determine the m SRS ports, and then determine the correlation information between the channel information corresponding to the m SRS ports and the channel information corresponding to the Q ports. For example, the terminal device may select, based on an implementation of the terminal device, the m ports from the Q ports supported by the terminal device, and map the m ports to the m SRS ports. In addition, the correlation information between the channel information corresponding to the m SRS ports and the channel information corresponding to the Q ports is sent in the first report. In other words, the first report configuration may include the SRS resource set identifier, and the terminal device determines the quantity m of SRS ports based on the first SRS resource set identified by the SRS resource set identifier. The first report configuration may not include the quantity m of SRS ports, but may include the SRS resource set identifier used to determine the quantity m of SRS ports.

Optionally, the correlation information configured in the first report configuration includes an autocorrelation matrix of the channel information corresponding to the port determined based on the first SRS resource set identified by the resource set identifier. The terminal device may determine m based on the first SRS resource set identified by the resource set identifier, select the m ports from the Q ports, determine the m ports as the m SRS ports, and determine a first autocorrelation matrix of the m ports. Therefore, the first report may include the first autocorrelation matrix of the m ports.

Optionally, the correlation information configured in the first report configuration includes a cross-correlation matrix of the port determined based on the first SRS resource set identified by the SRS resource set identifier and the Q ports determined based on the first report configuration. The terminal device may determine, based on Q in the first report configuration, that the terminal device supports a total of Q ports. The terminal device may determine m based on the first SRS resource set identified by the SRS resource set identifier. The terminal device may select the m ports from the Q ports, map the m ports to the m SRS ports, and may determine a first cross-correlation matrix of the channel information corresponding to the m ports and the channel information corresponding to the Q ports. Therefore, the first report may include the first cross-correlation matrix of the channel information corresponding to the m ports and the channel information corresponding to the Q ports.

Optionally, the correlation information configured in the first report configuration includes a cross-correlation matrix of the channel information corresponding to the port determined based on the first SRS resource set identified by the SRS resource set identifier and channel information corresponding to Q-m ports. The terminal device determines, based on the indication information indicating Q in the first report, that the terminal device supports a total of Q ports. The terminal device may determine m based on the first SRS resource set identified by the SRS resource set identifier. The terminal device may select the m ports from the Q ports, map the m ports to the m SRS ports, and determine the Q-m ports other than the m ports in the Q ports. The terminal device may determine a second cross-correlation matrix of the channel information corresponding to the m ports and the channel information corresponding to the Q-m ports. Therefore, the first report may include the second cross-correlation matrix of the channel information corresponding to the m ports and the channel information corresponding to the Q-m ports.

Optionally, the correlation information configured in the first report configuration may further include a minimum mean square error (minimum mean square error, MMSE) extrapolation coefficient of the autocorrelation matrix of the channel information corresponding to the port determined based on the first SRS resource set identified by the SRS resource set identifier and a cross-correlation matrix of the channel information corresponding to the port determined based on the first SRS resource set identified by the resource set identifier and the channel information corresponding to the Q ports determined based on the first report configuration. In this case, the first report determined by the terminal device may include an MMSE extrapolation coefficient of the first autocorrelation matrix of the channel information corresponding to the m ports and the first cross-correlation matrix of the channel information corresponding to the m ports and the channel information corresponding to the Q ports, and/or the first report determined by the terminal device may include an MMSE extrapolation coefficient of the first autocorrelation matrix of the channel information corresponding to the m ports and the second cross-correlation matrix of the channel information corresponding to the m ports and the channel information corresponding to the Q-m ports.

Case 2: The first report configuration is used to configure correlation information between the channel information corresponding to the port determined based on the first SRS resource set identified by the SRS resource set identifier and the channel information corresponding to the port determined based on the capability of the terminal device.

In Case 2, the terminal device may determine Q based on the capability of the terminal device. The terminal device may determine the first SRS resource set based on the SRS resource set identifier in the first report configuration, and determine the quantity m of SRS ports based on the first SRS resource set. The terminal device may determine the m SRS ports, and then determine the correlation information between the channel information corresponding to the m SRS ports and the channel information corresponding to the Q ports. For example, the terminal device may select the m ports from the Q ports based on an implementation of the terminal device, and map the m ports to the m SRS ports. In addition, the correlation information between the channel information corresponding to the m SRS ports and the channel information corresponding to the Q ports is sent in the first report. In other words, the first report configuration may include the SRS resource set identifier, and the terminal device determines the quantity m of SRS ports based on the first SRS resource set identified by the SRS resource set identifier. The first report configuration may not include the quantity m of SRS ports, but may include the SRS resource set identifier used to determine the quantity m of SRS ports.

Optionally, the correlation information configured in the first report configuration includes an autocorrelation matrix of the channel information corresponding to the port determined based on the first SRS resource set identified by the resource set identifier. The terminal device may determine m based on the first SRS resource set identified by the resource set identifier, select the m ports from the Q ports and map the m ports to the m SRS ports, and determine a first autocorrelation matrix of the channel information corresponding to the m ports. Therefore, the first report may include the first autocorrelation matrix of the channel information corresponding to the m ports.

Optionally, the correlation information configured in the first report configuration includes a cross-correlation matrix of the channel information corresponding to the port determined based on the first SRS resource set identified by the SRS resource set identifier and the channel information corresponding to the Q ports determined based on the capability of the terminal device. The terminal device may determine, based on the capability of the terminal device, that the terminal device supports a total of Q ports. The terminal device may determine m based on the first SRS resource set identified by the SRS resource set identifier. The terminal device may select the m ports from the Q ports, map the m ports to the m SRS ports, and may determine a first cross-correlation matrix of the channel information corresponding to the m ports and the channel information corresponding to the Q ports. Therefore, the first report may include the first cross-correlation matrix of the channel information corresponding to the m ports and the channel information corresponding to the Q ports.

Optionally, the correlation information configured in the first report configuration includes a cross-correlation matrix of the channel information corresponding to the port determined based on the first SRS resource set identified by the SRS resource set identifier and channel information corresponding to Q-m ports. The terminal device may determine, based on the capability of the terminal device, that the terminal device supports a total of Q ports. The terminal device may determine m based on the first SRS resource set identified by the SRS resource set identifier. The terminal device may select the m ports from the Q ports, map the m ports to the m SRS ports, and determine the Q-m ports other than the m ports in the Q ports. The terminal device may determine a second cross-correlation matrix of the channel information corresponding to the m ports and the channel information corresponding to the Q-m ports. Therefore, the first report may include the second cross-correlation matrix of the channel information corresponding to the m ports and the channel information corresponding to the Q-m ports.

Optionally, the correlation information configured in the first report configuration may further include a minimum mean square error (minimum mean square error, MMSE) extrapolation coefficient of the autocorrelation matrix of the channel information corresponding to the port determined based on the first SRS resource set identified by the SRS resource set identifier and a cross-correlation matrix of the channel information corresponding to the port determined based on the first SRS resource set identified by the resource set identifier and the channel information corresponding to the Q ports determined based on the capability of the terminal device. In this case, the first report determined by the terminal device may include a first MMSE extrapolation coefficient of the first autocorrelation matrix of the channel information corresponding to the m ports and the first cross-correlation matrix of the channel information corresponding to the m ports and the channel information corresponding to the Q ports, and/or the first report determined by the terminal device may include an MMSE extrapolation coefficient of the first autocorrelation matrix of the channel information corresponding to the m ports and the second cross-correlation matrix of the channel information corresponding to the m ports and the channel information corresponding to the Q-m ports.

Optionally, the first report configuration is further used to configure the terminal device to indicate the port determined based on the first SRS resource set identified by the SRS resource set identifier. In other words, the terminal device needs to indicate, to the network device based on the first report configuration, the m ports determined by the terminal device. Therefore, the first report may include first indication information, and the first indication information may indicate the m ports determined by the terminal device.

The following describes three manners in which the first indication information indicates the m ports.

Manner 1: The first indication information indicates an index value of each of the m ports. For example, the network device may configure Q index values corresponding to the Q ports of the terminal device. For example, the Q index values of the Q ports are respectively 0, 1, 2, ..., and Q-1. For example, m is 2, and the m ports are a port with an index of 0 and a port with an index of 2. The first indication information indicates the index 0 and the index 2.

Manner 2: The first indication information is a bitmap (bitmap) with a length of Q bits, the Q ports are in one-to-one correspondence with the Q bits, a value of a bit corresponding to each of the m ports in the bitmap is a first value, a value of a bit corresponding to each of the Q-m ports in the bitmap is a second value, the first value is different from the second value, and the Q-m ports are ports other than the m ports in the Q ports. For example, when Q=8 and m=2, a reported bitmap with a length of 8 bits is [0,1,0,0,0,0,0,1], the first value is 1, and the second value is 0. It indicates that m=2 ports for sending SRSs correspond to a port 1 and a port 7 in eight ports.

Manner 3: The first indication information indicates first index values of the m ports in a first table, and different port combinations correspond to different index values in the first table. Optionally, different values of Q correspond to different tables, different values of m may also correspond to different tables, or different values of Q and different values of m may also correspond to different tables. For example, Q=8, m=2, and combinations of two different ports in the first table correspond to different index values. For example, the first table is shown in Table 1. If the two ports are respectively a port with an index value of 1 and a port with an index value of 6, the first index value indicated by the first indication information may be 1. The network device may determine, based on 1 indicated by the first indication information and Table 1, that ports used by the terminal device to send SRSs are the port with the index value of 1 and the port with the index value of 6. For another example, Q=8, m=4, and combinations of four different ports in the first table correspond to different index values. For example, the first table is shown in Table 2. If the four ports are respectively a port with an index value of 0, a port with an index value of 2, a port with an index value of 4, and a port with an index value of 6, the first index value indicated by the first indication information is 0. The network device may determine, based on 0 indicated by the first indication information and Table 2, that ports used by the terminal device to send SRSs are the port with the index value of 0, the port with the index value of 2, the port with the index value of 4, and the port with the index value of 6. Optionally, when Q is the same, and m is different, the first table may still be used, and different port combinations correspond to different index values in the first table. Optionally, when Q is the same, and m is different, the first table may be used. For example, when Q is 8, and m is 2 or m is 4, the first table may be used. If the terminal device determines that m=2, and the two ports are respectively a port with an index value of 3 and a port with an index value of 4, the first index value indicated by the first indication information is 3. The network device determines, based on m=4 and Table 3, that ports used by the terminal device to send SRSs are the port with the index value of 1, the port with the index value of 3, the port with the index value of 5, and the port with the index value of 7. If the terminal device determines that m=4, and the four ports are respectively a port with an index value of 1, a port with an index value of 3, a port with an index value of 5, and a port with an index value of 7, the first index value indicated by the first indication information is 5. The network device may determine, based on the first index value 5 and Table 3, that ports used by the terminal device to send SRSs are the port with the index value of 1, the port with the index value of 3, the port with the index value of 5, and the port with the index value of 7.

**Table 1**

| Index value mapped to a port combination | Index values of m=2 SRS ports |
|---|---|
| 0 | 0, 7 |
| 1 | 1, 6 |
| 2 | 2, 5 |
| 3 | 3, 4 |

**Table 2**

| Index value mapped to a port combination | Index values of m=4 SRS ports |
|---|---|
| 0 | 0, 2, 4, 6 |
| 1 | 1, 3, 5, 7 |

**Table 3**

| Index value mapped to a port combination | Index values of m SRS ports |
|---|---|
| 0 | 0, 7 |
| 1 | 1, 6 |
| 2 | 2, 5 |
| 3 | 3, 4 |
| 4 | 0, 2, 4, 6 |
| 5 | 1, 3, 5, 7 |

In the foregoing three manners, the terminal device may indicate the m ports to the network device in the first report. In this way, the network device may determine the m ports based on the first indication information in the first report, and determine the channel information of the Q ports based on the SRSs sent through the m ports of the terminal device and the correlation information between the m ports and the Q ports. In this way, an uplink channel is estimated, and a downlink channel is estimated based on the uplink channel, so that a precoding matrix used for downlink transmission can be determined based on the estimated downlink channel.

Optionally, the method 200 further includes: The terminal device sends the SRSs through the m ports, and the network device may receive the SRSs sent through the m ports of the terminal device. The network device may measure fourth channel information of the m ports, determine fifth channel information of the Q ports based on the fourth channel information and the correlation information in the first report, may estimate an uplink channel based on the fifth channel information, and estimate a downlink channel based on the uplink channel. In this way, a precoding matrix used for downlink transmission can be determined based on the estimated downlink channel, to improve a downlink precoding capability. Optionally, the m ports may be m SRS ports, or a port used to send an SRS may be an SRS port.

Optionally, the method 200 further includes: The terminal device sends the SRSs by using a first SRS resource set, and the network device receives the SRSs sent by the terminal device by using the first SRS resource set. Optionally, that the terminal device sends the SRSs by using the first SRS resource set includes: The terminal device sends the SRSs through the m ports corresponding to the first SRS resource set. That the network device receives the SRSs sent by the terminal device by using the first SRS resource set includes: The network device receives the SRSs sent by the terminal device through the m ports corresponding to the first SRS resource set.

In the foregoing solution, the first report sent by the terminal device may include the correlation information between the m ports and the Q ports. Q may be configured in the first report configuration or determined based on the capability of the terminal device. The correlation information may include at least one of the autocorrelation information of the m ports, the cross-correlation information between the m ports and the Q ports, or the cross-correlation information between the m ports and the Q-m ports. In this way, the network device may determine the fifth channel information of the Q ports based on the correlation information in the first report and the fourth channel information of the m ports, so that the uplink channel can be estimated based on the fifth channel information of the Q ports, and the downlink channel can be estimated based on the uplink channel. Therefore, the precoding matrix used for downlink transmission can be determined based on the estimated downlink channel, to improve a downlink precoding capability.

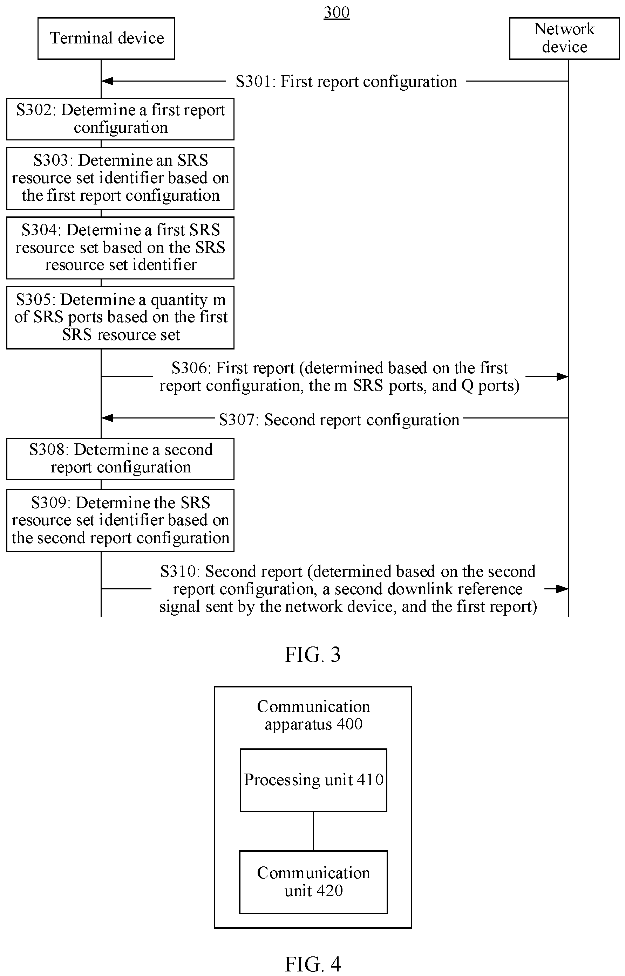

In some cases, the correlation information in the first report in the communication method 200 may be invalid or ineffective. For example, the correlation information between the m ports and the Q ports in the first report may be invalid or ineffective. Therefore, the terminal device needs to indicate to the network device that the correlation information between the m ports and the Q ports is invalid or ineffective, to avoid a case in which determined fifth channel information is inaccurate when the network device determines the fifth channel information of the Q ports based on the correlation information in the first report and the fourth channel information of the m ports, consequently, the estimated uplink channel is inaccurate, estimation of the downlink channel is also inaccurate, and accuracy of downlink precoding is affected. In this embodiment of this application, the terminal device may indicate, to the network device, that the correlation information in the first report is invalid. For example, as shown in FIG. 3, the communication method 300 includes the following steps.

S301 to S306 are respectively the same as S210 to S260.

S307: The network device may send a second report configuration to the terminal device, and the terminal device receives the second report configuration from the network device.

The second report configuration is used to configure the terminal device to indicate invalidity to the network device when the correlation information in the first report is invalid.

It may be understood that a sequence of S307 and S301 is not limited, and S307 may be performed before, after, or simultaneously with S301. This is not limited in this embodiment of this application. In other words, the network device may simultaneously send the first report configuration and the second report configuration to the terminal device, or may separately send the first report configuration and the second report configuration.

S308: The terminal device determines the second report configuration.

Optionally, the terminal device may determine the second report configuration based on the second report configuration sent by the network device in S307.

S309: The terminal device determines the SRS resource set identifier based on the second report configuration.

Optionally, the SRS resource set identifier in the first report configuration is the same as that in the second report configuration, and the first report configuration is associated with the second report configuration by using the same SRS resource set identifier. In other words, the second report configuration sent by the network device is used to configure whether the first report corresponding to the first report configuration associated with the same SRS resource set identifier is valid.

It should be noted that the communication method 300 may not include S309, and the second report configuration includes the SRS resource set identifier.

S310: The terminal device sends a second report, and the network device receives the second report.

Optionally, the second report is determined based on the second report configuration, a second downlink reference signal sent by the network device, and the first report. Optionally, the second report is determined based on the second report configuration, the second downlink reference signal sent by the network device, and the correlation information in the first report.

Optionally, the second downlink reference signal may be a second CSI-RS. Optionally, the network device may send the second downlink reference signal on a second NZP-CSI-RS resource set, and the terminal device may receive the second downlink reference signal on the second NZP-CSI-RS resource set.

Optionally, before S310, the terminal device may determine whether the correlation information in the first report is valid. If the correlation information in the first report is valid, the terminal device may not send the second report. If the correlation information in the first report is invalid, the terminal device may send the second report. The second report includes indication information indicating that the correlation information is invalid. Optionally, if the correlation information in the first report is valid, the terminal device may send the second report, and the second report may include indication information indicating the m ports. Invalid may also be understood as being ineffective or expired.

Optionally, the network device may send the second downlink reference signal, and the terminal device may determine first channel information corresponding to the Q ports based on the second downlink reference signal, and may also determine second channel information corresponding to the m ports based on the second downlink reference signal. The terminal device may determine third channel information corresponding to the Q ports based on the first report and the second channel information. The terminal device may determine the first channel information and the third channel information, to determine content included in the second report. The first channel information may be understood as actual channel information corresponding to the Q ports. The third channel information may be possible channel information that corresponds to the Q ports and that is determined by the terminal device based on the correlation information in the first report and the second channel information. The network device may also determine the possible channel information corresponding to the Q ports based on the correlation information in the first report and the second channel information. Therefore, the terminal device may compare the actual channel information corresponding to the Q ports with the possible channel information corresponding to the Q ports. If the actual channel information corresponding to the Q ports differs greatly from the possible channel information corresponding to the Q ports, it is determined that the correlation information in the first report is inaccurate, and the terminal device may need to report again. Therefore, the terminal device needs to indicate, to the network device, that the correlation information in the first report is invalid. The terminal device may directly indicate, to the network device, that the correlation information in the first report is invalid, or may indirectly indicate that the correlation information in the first report is invalid. If the actual channel information corresponding to the Q ports differs slightly from the possible channel information corresponding to the Q ports, it indicates that the correlation information in the first report is accurate. Therefore, it indicates that the first report is valid. The following describes the second report in five manners.

Optionally, the second channel information of the m ports may be related to fourth channel information of the m ports.

Manner 1: If a degree of correlation between the first channel information and the third channel information is less than or equal to a preset degree, the sent second report includes a third value. Optionally, the third value indicates that the correlation information between the channel information corresponding to the m ports and the channel information corresponding to the Q ports in the first report is invalid or ineffective. If the degree of correlation between the first channel information and the third channel information is greater than the preset degree, the sent second report includes a fourth value. The fourth value indicates that the correlation information between the channel information corresponding to the m ports and the channel information corresponding to the Q ports in the first report is valid. The third value is different from the fourth value. For example, the third value is 1, and the fourth value is 0. In other words, if the first channel information is related to the third channel information, it indicates that the correlation information in the first report is valid. If the first channel information is basically unrelated to the third channel information, it indicates that the correlation information in the first report is invalid or ineffective.

Manner 2: The second report may include indication information indicating a degree of correlation between the first channel information and the second channel information. In this way, the network device may determine, based on the indication information indicating the degree of correlation between the first channel information and the second channel information in the second report, whether the degree of correlation is less than or equal to a preset degree. If the network device determines that the degree of correlation is less than or equal to the preset degree, the network device may learn that the correlation information between the channel information corresponding to the m ports and the channel information corresponding to the Q ports in the first report is invalid or ineffective.

Manner 3: If a degree of correlation between the first channel information and the third channel information is less than or equal to a preset degree, the sent second report includes a bitmap with a length of Q bits. A value of each of the Q bits is a second value. In other words, if the first channel information is not related to the third channel information, the second report may include the bitmap with a length of Q bits, a value of each of the Q bits is the second value, and a port is not indicated. In this way, the network device can learn, by using the special values of the Q bits, that the correlation information in the first report is invalid. For example, if Q is 8, and the second value is 0, eight bits in the second report are 00000000. Certainly, a value of each of the Q bits may be another value, and is not limited to the second value. In conclusion, a bit in the Q bits does not indicate a port, and the network device may determine, based on special values of the Q bits, that the correlation information in the first report is invalid.

If the degree of correlation between the first channel information and the third channel information is greater than the preset degree, the sent second report includes a bitmap with a length of Q bits. The Q ports are in one-to-one correspondence with the Q bits, a value of a bit corresponding to each of the m ports in the bitmap is a first value, a value of a bit corresponding to each of the Q-m ports in the bitmap is the second value, the first value is different from the second value, and the Q-m ports are ports other than the m ports in the Q ports. For example, when Q=8 and m=2, a bitmap with a length of 8 bits is reported as [0,1,0,0,0,0,0,1], the first value is 1, and the second value is 0. It indicates that ports for sending SRSs correspond to a port 1 and a port 7 in eight ports. Optionally, both the first report and the second report may include a bitmap with a length of Q bits, or the first report includes a bitmap with a length of Q bits, and the second report may not include a bitmap with a length of Q bits, or the first report does not include a bitmap with a length of Q bits, and the second report may include a bitmap with a length of Q bits.

Manner 4: If a degree of correlation between the first channel information and the third channel information is less than or equal to a preset degree, second indication information included in the sent second report indicates a fifth value. The fifth value is different from an index value of any one of the Q ports. For example, the fifth value may be -1. In other words, if the first channel information is not related to the third channel information, the second report may include the second indication information, and an index value indicated by the second indication information is the fifth value and is not an index value of a port. In this way, the network device can learn, by using the special value, that the correlation information between the channel information corresponding to the m ports and the channel information corresponding to the Q ports in the first report is invalid. Certainly, the fifth value may be another value, for example, may be -2. In conclusion, when the fifth value indicated by the second indication information is not an index value of a port, the network device may determine, based on the fifth value, that the correlation information in the first report is invalid.

If the degree of correlation between the first channel information and the third channel information is greater than the preset degree, first indication information included in the sent second report indicates an index value of each of the m ports. For example, the network device may configure Q index values corresponding to the Q ports of the terminal device. For example, the Q index values of the Q ports are respectively 0, 1, 2, ..., and Q-1. For example, m is 2, and the m ports are a port with an index of 0 and a port with an index of 2. The first indication information indicates the index 0 and the index 2. Optionally, in this case, the first report may include the first indication information or may not include the first indication information. In other words, both the first report and the second report may include the first indication information indicating the m ports, or the first report may include the first indication information indicating the m ports, and the second report does not include the first indication information indicating the m ports, or the first report does not include the first indication information indicating the m ports, and the second report includes the first indication information indicating the m ports.

Manner 5: If a degree of correlation between the first channel information and the third channel information is less than or equal to a preset degree, second indication information included in the sent second report indicates a second index value in a first table. The first table includes index values of a first type, different index values in the index values of the first type correspond to different port combinations, and the second index value is different from any one of the index values of the first type. In other words, if the first channel information is not related to the third channel information, the second report may include the second indication information, and the second index value indicated by the second indication information does not correspond to a combination of ports. In this way, the network device can learn, in a special indication manner, that the correlation information between the channel information corresponding to the m ports and the channel information corresponding to the Q ports in the first report is invalid. For example, the first table is shown in Table 4. In Table 4, indexes 0, 1, 2, and 3 are the index values of the first type, or the index values of the first type include 0, 1, 2, and 3. If the terminal device determines that the degree of correlation between the first channel information and the third channel information is less than or equal to the preset degree, the second index value indicated by the second indication information in the second report is 4 in Table 4. 4 is not an index value of the first type, or 4 is different from any index value 0, 1, 2, or 3 in the index values of the first type. The network device may determine, based on the second index value 4 and Table 4, that the correlation information in the first report is invalid. For example, the first table is shown in Table 5. In Table 5, indexes 0 and 1 are the index values of the first type, or the index values of the first type include 0 and 1. If the terminal device determines that the degree of correlation between the first channel information and the third channel information is less than or equal to the preset degree, the second index value indicated by the second indication information in the second report is 2 in Table 5. 2 is not an index value of the first type, or 2 is different from any index value 0 or 1 in the index values of the first type. The network device may determine, based on the second index value 2 and Table 5, that the correlation information in the first report is invalid.

**Table 4**

| Index value mapped to a port combination | Index values of m SRS ports |
|---|---|
| 0 | 0, 7 |
| 1 | 1, 6 |
| 2 | 2, 5 |
| 3 | 3, 4 |
| 4 | error |

**Table 5**

| Index value mapped to a port combination | Index values of m=4 SRS ports |
|---|---|
| 0 | 0, 2, 4, 6 |
| 1 | 1, 3, 5, 7 |
| 2 | error |

If the degree of correlation between the first channel information and the third channel information is greater than the preset degree, the first indication information included in the sent second report indicates first index values of the m ports in the first table, and the index values of the first type include the first index value. For example, as shown in Table 5, the index value 0 and the index value 1 in Table 5 correspond to different port combinations, but the index value 2 does not correspond to any port combination.

Optionally, in the foregoing five manners, the second report may further include indication information indicating the first report. In this way, the network device may learn, based on the indication information, that the first report is invalid. Alternatively, the first report may further include indication information indicating the correlation information in the first report. In this way, the network device may learn, based on the indication information, that the correlation information in the first report is invalid.

Optionally, in the foregoing five manners, that the degree of correlation between the first channel information and the third channel information is less than or equal to the preset degree specifically includes: Correlation between P eigenvectors corresponding to P maximum eigenvalues of a matrix corresponding to the first channel information and P eigenvectors corresponding to P maximum eigenvalues of a matrix corresponding to the third channel information is less than or equal to a first threshold, where P is a positive integer, and one eigenvalue corresponds to one eigenvector. Optionally, the matrix corresponding to the first channel information may be a diagonal matrix obtained by row-column transformation, and the matrix corresponding to the third channel information may be a diagonal matrix obtained by row-column transformation. Optionally, P is a preset value or a value configured by the network device, and P is a positive integer. That the degree of correlation between the first channel information and the third channel information is greater than the preset degree specifically includes: The correlation between the P eigenvectors corresponding to the P maximum eigenvalues of the matrix corresponding to the first channel information and the P eigenvectors corresponding to the P maximum eigenvalues of the matrix corresponding to the third channel information is greater than the first threshold. Optionally, the first threshold is a preset value or a value configured by the network device. In other words, the correlation between the P eigenvectors corresponding to the P maximum eigenvalues of the matrix corresponding to the first channel information and the P eigenvectors corresponding to the P maximum eigenvalues of the matrix corresponding to the third channel information may represent the degree of correlation between the first channel information and the third channel information, and the first threshold may represent the preset degree.

Optionally, in the foregoing five manners, that the degree of correlation between the first channel information and the third channel information is less than or equal to the preset degree specifically includes: Correlation between the matrix corresponding to the first channel information and the matrix corresponding to the third channel information is less than or equal to a second threshold. That the degree of correlation between the first channel information and the third channel information is greater than the preset degree specifically includes: The correlation between the matrix corresponding to the first channel information and the matrix corresponding to the third channel information is greater than the second threshold. Optionally, the second threshold is a preset value or a value configured by the network device. In other words, the correlation between the matrix corresponding to the first channel information and the matrix corresponding to the third channel information may represent the degree of correlation between the first channel information and the third channel information, and the second threshold may represent the preset degree.

Optionally, in the foregoing five manners, that the degree of correlation between the first channel information and the third channel information is less than or equal to the preset degree specifically includes: A normalized mean square error (normalized mean square error, NMSE) of the matrix corresponding to the first channel information and the matrix corresponding to the third channel information is greater than or equal to a third threshold. That the degree of correlation between the first channel information and the third channel information is greater than the preset degree specifically includes: The normalized mean square error NMSE of the matrix corresponding to the first channel information and the matrix corresponding to the third channel information is less than the third threshold. Optionally, the third threshold is a preset value or a value configured by the network device. In other words, the NMSE of the matrix corresponding to the first channel information and the matrix corresponding to the third channel information may represent the degree of correlation between the first channel information and the third channel information, and the second threshold may represent the preset degree.

Optionally, in the foregoing five manners, the network device may not determine the channel information of the Q ports based on the correlation information in the first report. Optionally, the network device may send a third report configuration, and the terminal device may report new correlation information based on the third report configuration. For example, an SRS resource set identifier in the third report configuration may be the same as or different from the SRS resource set identifier in the first report configuration.

Optionally, a periodicity in which the terminal device sends the second report may be less than a periodicity in which the terminal device sends the first report. In other words, the terminal device may send one or more first reports based on the first report configuration, and may send one or more second reports based on the second report configuration, and the sending periodicity of the first reports is greater than the sending periodicity of the second reports. Signaling overheads occupied by the correlation information in the first report are signaling overheads occupied by the indication information indicating that the correlation information is invalid in the second report. Therefore, a sending frequency of the first report may be lower than a sending frequency of the second report.

In the communication method 200, after the terminal device sends the first report, if the terminal device determines that the correlation information in the first report is invalid, the terminal device may send the second report to the network device. The second report may include the indication information indicating that the correlation information in the first report is invalid. In this way, the network device may determine, based on the second report, that the correlation information in the first report is invalid, to avoid a case in which determined fifth channel information of the Q ports is inaccurate when the network device determines the fifth channel information based on the correlation information in the first report and the fourth channel information of the m ports. This helps improve accuracy of downlink precoding.

The foregoing describes the method embodiments provided in this application, and the following describes apparatus embodiments provided in this application. It should be understood that descriptions of the apparatus embodiments correspond to the descriptions of the method embodiments. Therefore, for content that is not described in detail, refer to the foregoing method embodiments. For brevity, details are not described herein again.

FIG. 4 is a block diagram of a communication apparatus according to an embodiment of this application. As shown in FIG. 4, the communication apparatus 400 may include a processing unit 410 and a communication unit 420. The communication unit 420 may implement a corresponding communication function. The communication may be internal communication of the communication apparatus 400, or may be communication between the communication apparatus 400 and another apparatus. The processing unit 410 may implement a corresponding processing function. The communication unit 420 may also be referred to as a communication interface or a transceiver unit. Optionally, the communication apparatus 400 may further include a storage unit. The storage unit may be configured to store instructions and/or data. The processing unit 410 may read the instructions and/or the data in the storage unit, so that the apparatus implements the foregoing method embodiments.

In a possible design, the communication apparatus 400 may be the terminal device in the communication method 200 and the communication method 300, or may be a module or a chip used in the terminal device. The communication method 200 and the method 300 may be used to perform steps or procedures performed by the terminal device in the foregoing embodiments.

Specifically, the processing unit 410 is configured to: determine a first report configuration; determine a channel sounding reference signal SRS resource set identifier based on the first report configuration; determine a first SRS resource set based on the SRS resource set identifier; and determine a quantity m of SRS ports based on the first SRS resource set.

The communication unit 420 is configured to send a first report, where the first report is determined based on the first report configuration, the m SRS ports, and Q ports, Q is determined based on the first report configuration and/or a capability of the communication apparatus 400, m and Q are positive integers, and Q is greater than or equal to m.

Optionally, the first report configuration is used to configure correlation information between channel information corresponding to the port determined based on the first SRS resource set identified by the SRS resource set identifier and channel information corresponding to Q ports determined based on the first report configuration; or the first report configuration is used to configure correlation information between the channel information corresponding to the port determined based on the first SRS resource set identified by the SRS resource set identifier and channel information corresponding to a port determined based on the capability of the terminal device.

Optionally, the correlation information configured in the first report configuration includes at least one of the following: an autocorrelation matrix of the channel information corresponding to the port determined based on the first SRS resource set identified by the SRS resource set identifier, a cross-correlation matrix of the channel information corresponding to the port determined based on the first SRS resource set identified by the SRS resource set identifier and the channel information corresponding to the Q ports determined based on the first report configuration, a cross-correlation matrix of the channel information corresponding to the port determined based on the first SRS resource set identified by the SRS resource set identifier and the channel information corresponding to the port determined based on the capability of the terminal device, a cross-correlation matrix of the channel information corresponding to the port determined based on the first SRS resource set identified by the SRS resource set identifier and channel information corresponding to Q-m ports, and a minimum mean square error MMSE extrapolation coefficient determined by the autocorrelation matrix and the cross-correlation matrix.

The first report includes at least one of the following: a first autocorrelation matrix of the channel information corresponding to the m ports, a first cross-correlation matrix of the channel information corresponding to the m ports and the channel information corresponding to the Q ports, a second cross-correlation matrix of the channel information corresponding to the m ports and the channel information corresponding to the Q-m ports, a first MMSE extrapolation coefficient determined based on the first autocorrelation matrix and the first cross-correlation matrix, and a second MMSE extrapolation coefficient determined based on the first autocorrelation matrix and the second cross-correlation matrix, where the Q-m ports are ports other than the m ports in the Q ports, and the m SRS ports are used to measure the channel information corresponding to the m ports.

Optionally, the communication unit 420 is configured to receive a first downlink reference signal from a network device; and the processing unit 410 is configured to determine the first report based on the first downlink reference signal.

Optionally, the first report configuration is used to configure the communication apparatus 400 to indicate the port determined based on the first SRS resource set identified by the SRS resource set identifier, the first report includes first indication information, and the first indication information indicates the m ports.

Optionally, the first indication information indicates an index value of each of the m ports.

Optionally, the first indication information is a bitmap with a length of Q bits, the Q ports are in one-to-one correspondence with the Q bits, a value of a bit corresponding to each of the m ports in the bitmap is a first value, a value of a bit corresponding to each of the Q-m ports in the bitmap is a second value, the first value is different from the second value, and the Q-m ports are ports other than the m ports in the Q ports.

Optionally, the first indication information indicates first index values of the m ports in a first table, and different port combinations correspond to different index values in the first table.

Optionally, the processing unit 410 is further configured to: determine a second report configuration; and determine the SRS resource set identifier based on the second report configuration. The communication unit 420 is further configured to send a second report, where the second report is determined based on the second report configuration, a second downlink reference signal sent by the network device, and the first report.

Optionally, the processing unit 410 is further configured to: determine first channel information corresponding to the Q ports based on the second downlink reference signal received from the network device; determine second channel information corresponding to the m ports based on the second downlink reference signal; and determine third channel information corresponding to the Q ports based on the first report and the second channel information.

Optionally, if a degree of correlation between the first channel information and the third channel information is less than or equal to a preset degree, the sent second report includes a third value; and if the degree of correlation between the first channel information and the third channel information is greater than the preset degree, the sent second report includes a fourth value, where the third value is different from the fourth value.

Optionally, the second report includes indication information indicating a degree of correlation between the first channel information and the third channel information.

Optionally, if a degree of correlation between the first channel information and the third channel information is less than or equal to a preset degree, the sent second report includes a bitmap with a length of Q bits, where a value of each of the Q bits is the second value. If the degree of correlation between the first channel information and the third channel information is greater than the preset degree, the sent second report includes a bitmap with a length of Q bits, the Q ports are in one-to-one correspondence with the Q bits, a value of a bit corresponding to each of the m ports in the bitmap is the first value, and a value of a bit corresponding to each of the Q-m ports in the bitmap is the second value, where the first value is different from the second value, and the Q-m ports are ports other than the m ports in the Q ports.

Optionally, if a degree of correlation between the first channel information and the third channel information is less than or equal to a preset degree, second indication information included in the sent second report indicates a fifth value, where the fifth value is different from an index value of any one of the Q ports. If the degree of correlation between the first channel information and the third channel information is greater than the preset degree, the first indication information included in the sent second report indicates the index value of each of the m ports.

Optionally, if a degree of correlation between the first channel information and the third channel information is less than or equal to a preset degree, second indication information included in the sent second report indicates a second index value in the first table.

If the degree of correlation between the first channel information and the third channel information is greater than the preset degree, the first indication information included in the sent second report indicates the first index values of the m ports in the first table, the first table includes index values of a first type, the index values of the first type include the first index value, different index values in the index values of the first type correspond to different port combinations, and the second index value is different from any one of the index values of the first type.

Optionally, that the degree of correlation between the first channel information and the third channel information is less than or equal to the preset degree specifically includes: correlation between P eigenvectors corresponding to P maximum eigenvalues of a matrix corresponding to the first channel information and P eigenvectors corresponding to P maximum eigenvalues of a matrix corresponding to the third channel information is less than or equal to a first threshold, where P is a positive integer; or includes: correlation between the matrix corresponding to the first channel information and the matrix corresponding to the third channel information is less than or equal to a second threshold; or is: a normalized mean square error NMSE of the matrix corresponding to the first channel information and the matrix corresponding to the third channel information is greater than or equal to a third threshold. That the degree of correlation between the first channel information and the third channel information is greater than the preset degree is specifically: the correlation between the P eigenvectors corresponding to the P maximum eigenvalues of the matrix corresponding to the first channel information and the P eigenvectors corresponding to the P maximum eigenvalues of the matrix corresponding to the third channel information is greater than the first threshold; or includes: the correlation between the matrix corresponding to the first channel information and the matrix corresponding to the third channel information is greater than the second threshold; or includes: the normalized mean square error NMSE of the matrix corresponding to the first channel information and the matrix corresponding to the third channel information is less than the third threshold.

In another possible design, the communication apparatus 400 may be the network device in the communication method 200 and the communication method 300, or may be a module or a chip used in the network device. The communication method 200 and the method 300 may be used to perform steps or procedures performed by the network device in the foregoing embodiments.

Specifically, the communication unit 420 is configured to: send a first report configuration; and receive a first report, where the first report is determined based on the first report configuration, m SRS ports, and Q ports, m is determined based on a first SRS resource set, the first SRS resource set is determined based on an SRS resource set identifier, the SRS resource set identifier is determined based on the first report configuration, Q is determined based on the first report configuration and/or a capability of a terminal device, m and Q are positive integers, and Q is greater than or equal to m.

Optionally, the first report configuration is used to configure correlation information between channel information corresponding to the port determined based on the first SRS resource set identified by the SRS resource set identifier and channel information corresponding to Q ports determined based on the first report configuration; or the first report configuration is used to configure correlation information between the channel information corresponding to the port determined based on the first SRS resource set identified by the SRS resource set identifier and channel information corresponding to a port determined based on the capability of the terminal device.

Optionally, correlation information configured in the first report configuration includes at least one of the following: an autocorrelation matrix of the channel information corresponding to the port determined based on the first SRS resource set identified by the SRS resource set identifier, a cross-correlation matrix of the channel information corresponding to the port determined based on the first SRS resource set identified by the SRS resource set identifier and the channel information corresponding to the Q ports determined based on the first report configuration, a cross-correlation matrix of the channel information corresponding to the port determined based on the first SRS resource set identified by the SRS resource set identifier and the channel information corresponding to the port determined based on the capability of the terminal device, a cross-correlation matrix of the channel information corresponding to the port determined based on the first SRS resource set identified by the SRS resource set identifier and channel information corresponding to Q-m ports, and an MMSE extrapolation coefficient determined by the autocorrelation matrix and the cross-correlation matrix. The first report includes at least one of the following: a first autocorrelation matrix of the channel information corresponding to the m ports, a first cross-correlation matrix of the channel information corresponding to the m ports and the channel information corresponding to the Q ports, a second cross-correlation matrix of the channel information corresponding to the m ports and the channel information corresponding to the Q-m ports, a first MMSE extrapolation coefficient determined based on the first autocorrelation matrix and the first cross-correlation matrix, and a second MMSE extrapolation coefficient determined based on the first autocorrelation matrix and the second cross-correlation matrix. The Q-m ports are ports other than the m ports in the Q ports, and the m SRS ports are used to measure the channel information corresponding to the m ports.

Optionally, the first report configuration is used to configure the terminal device to indicate the port determined based on the first SRS resource set identified by the SRS resource set identifier, the first report includes first indication information, and the first indication information indicates the m ports.

Optionally, the first indication information indicates an index value of each of the m ports; or the first indication information is a bitmap with a length of Q bits, the Q ports are in one-to-one correspondence with the Q bits, a value of a bit corresponding to each of the m ports in the bitmap is a first value, a value of a bit corresponding to each of the Q-m ports in the bitmap is a second value, the first value is different from the second value, and the Q-m ports are ports other than the m ports in the Q ports; or the first indication information indicates first index values of the m ports in a first table, and different port combinations correspond to different index values in the first table.

Optionally, the communication unit 420 is further configured to: send a second report configuration, where the second report configuration includes the SRS resource set identifier; and receive a second report, where the second report is determined based on the second report configuration, a second downlink reference signal sent by the communication apparatus 400, and the first report.

Optionally, the second report includes a third value, indicating that a degree of correlation between first channel information and third channel information is less than or equal to a preset degree; or the second report includes a fourth value, indicating that the degree of correlation between the first channel information and the third channel information is greater than the preset degree. The third value is different from the fourth value, the first channel information is determined by the terminal device based on the second downlink reference signal, the third channel information is determined by the terminal device based on second channel information of the m ports and the first report, and the second channel information of the m ports is determined based on the second downlink reference signal.

Optionally, the second report includes indication information indicating a degree of correlation between first channel information and third channel information. The first channel information is determined by the terminal device based on the second downlink reference signal, the third channel information is determined by the terminal device based on second channel information of the m ports and the first report, and the second channel information of the m ports is determined based on the second downlink reference signal.

Optionally, the second report includes a bitmap with a length of Q bits, and a value of each of the Q bits is the second value, indicating that a degree of correlation between first channel information and third channel information is less than or equal to a preset degree; or the second report includes a bitmap with a length of Q bits, a value of a bit corresponding to each of the m ports in the bitmap is the first value, and a value of a bit corresponding to each of the Q-m ports in the bitmap is the second value, indicating that the degree of correlation between the first channel information and the third channel information is greater than the preset degree. The Q ports are in one-to-one correspondence with the Q bits, the first value is different from the second value, and the Q-m ports are ports other than the m ports in the Q ports. The first channel information is determined by the terminal device based on the second downlink reference signal, the third channel information is determined by the terminal device based on second channel information of the m ports and the first report, and the second channel information of the m ports is determined based on the second downlink reference signal.

Optionally, second indication information included in the second report indicates a fifth value, indicating that a degree of correlation between first channel information and third channel information is less than or equal to a preset degree, where the fifth value is different from an index value of any one of the Q ports; or the first indication information included in the second report indicates the index value of each of the m ports, indicating that the degree of correlation between the first channel information and the third channel information is greater than the preset degree. The first channel information is determined by the terminal device based on the second downlink reference signal, the third channel information is determined by the terminal device based on second channel information of the m ports and the first report, and the second channel information of the m ports is determined based on the second downlink reference signal.

Optionally, second indication information included in the second report indicates a second index value in the first table, indicating that a degree of correlation between first channel information and third channel information is less than or equal to a preset degree; or the first indication information included in the second report indicates the first index values of the m ports in the first table, indicating that the degree of correlation between the first channel information and the third channel information is greater than the preset degree. The first table includes index values of a first type, the index values of the first type include the first index value, different index values in the index values of the first type correspond to different port combinations, and the second index value is different from any one of the index values of the first type. The first channel information is determined by the terminal device based on the second downlink reference signal, the third channel information is determined by the terminal device based on second channel information of the m ports and the first report, and the second channel information of the m ports is determined based on the second downlink reference signal.

Optionally, that the degree of correlation between the first channel information and the third channel information is less than or equal to the preset degree specifically includes: correlation between P eigenvectors corresponding to P maximum eigenvalues of a matrix corresponding to the first channel information and P eigenvectors corresponding to P maximum eigenvalues of a matrix corresponding to the third channel information is less than or equal to a first threshold, where P is a positive integer; or includes: correlation between the matrix corresponding to the first channel information and the matrix corresponding to the third channel information is less than or equal to a second threshold; or includes: a normalized mean square error NMSE of the matrix corresponding to the first channel information and the matrix corresponding to the third channel information is greater than or equal to a third threshold.

Optionally, that the degree of correlation between the first channel information and the third channel information is greater than the preset degree specifically includes: the correlation between the P eigenvectors corresponding to the P maximum eigenvalues of the matrix corresponding to the first channel information and the P eigenvectors corresponding to the P maximum eigenvalues of the matrix corresponding to the third channel information is greater than the first threshold; or includes: the correlation between the matrix corresponding to the first channel information and the matrix corresponding to the third channel information is greater than the second threshold; or includes: the normalized mean square error NMSE of the matrix corresponding to the first channel information and the matrix corresponding to the third channel information is less than the third threshold.

For details about steps or procedures performed by each unit in the communication apparatus 400, refer to the foregoing method embodiments. Details are not described herein again.

It should be understood that the "unit" in the communication apparatus 400 may be implemented by hardware, or may be implemented by software, or may be implemented by hardware executing corresponding software. For example, the "unit" may be an application-specific integrated circuit (application-specific integrated circuit, ASIC), an electronic circuit, a processor (for example, a shared processor, a dedicated processor, or a group processor) configured to execute one or more software or firmware programs, a memory, a combinational logic circuit, and/or another appropriate component that supports the described function. For another example, the communication unit 420 may be replaced with a transceiver or a transceiver circuit (for example, may include a receiver circuit and a transceiver circuit), and the processing unit 410 may be replaced with a processor or a processing circuit.

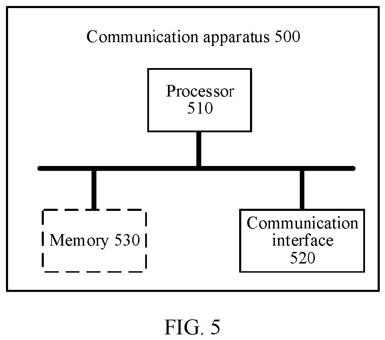

FIG. 5 is a block diagram of another communication apparatus 500 according to an embodiment of this application. The communication apparatus 500 may be a terminal device or a network device, or may be a chip, a chip system, a processor, or the like that supports the terminal device or the network device in implementing the foregoing methods. The apparatus may be configured to implement the methods described in the foregoing method embodiments. For details, refer to the descriptions in the foregoing method embodiments.

The apparatus 500 may include one or more processors 510. The processor 510 may also be referred to as a processing unit, and may implement a specific control function. The processor 510 may be a general-purpose processor, a dedicated processor, or the like, for example, a baseband processor or a central processing unit. The baseband processor may be configured to process a communication protocol and communication data. The central processing unit may be configured to: control the communication apparatus (for example, a base station, a baseband chip, a user chip, a DU, or a CU), execute a software program, and process data of the software program.

In an optional design, the processor 510 may also store instructions and/or data, and the instructions and/or the data may be run by the processor 510, to enable the communication apparatus 500 to perform the method described in the foregoing method embodiments. Optionally, the processing unit 410 in the communication apparatus 400 may be the processor 510.

In another optional design, the apparatus 500 may include a communication interface 520 configured to implement receiving and sending functions. For example, the communication interface 520 may be a transceiver circuit, an interface, an interface circuit, or a transceiver. The transceiver circuit, the interface, the interface circuit, or the transceiver configured to implement the receiving and sending functions may be separated, or may be integrated together. The transceiver circuit, the interface, the interface circuit, or the transceiver may be configured to read/write code/data, or the transceiver circuit, the interface, the interface circuit, or the transceiver may be configured to transmit or transfer a signal. Optionally, the communication unit 420 in the communication apparatus 400 may be the communication interface 520.

Optionally, the communication apparatus 500 may include one or more memories 530. The memory may store instructions. The instructions may be run on the processor 510, to enable the apparatus 500 to perform the method described in the foregoing method embodiments. Optionally, the memory 530 may further store data. Optionally, the processor 510 may also store instructions and/or data. The processor 510 and the memory 530 may be separately disposed, or may be integrated together.

A person skilled in the art may understand that, for ease of description, FIG. 5 shows only one memory and one processor. An actual terminal device and/or an actual network device each may include a plurality of processors and a plurality of memories. The memory may also be referred to as a storage medium, a storage device, or the like. This is not limited in embodiments of this application.

For example, the processor may include a baseband processor and a central processing unit. The baseband processor is mainly configured to process the communication protocol and the communication data. The central processing unit is mainly configured to: control the entire terminal device, execute the software program, and process the data of the software program. The processor in FIG. 5 integrates functions of the baseband processor and the central processing unit. A person skilled in the art may understand that the baseband processor and the central processing unit may alternatively be independent processors, and are interconnected by using a technology such as a bus. A person skilled in the art may understand that the terminal device may include a plurality of baseband processors to adapt to different network standards, and the terminal device may include a plurality of central processing units to enhance processing capabilities of the terminal device, and components of the terminal device may be connected by using various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the storage unit in a form of a software program, and the processor executes the software program to implement a baseband processing function.

It should be understood that, in a possible design, steps in the method embodiments provided in this application can be implemented by using a hardware integrated logic circuit in a processor, or by using instructions in a software form. The steps in the methods disclosed with reference to embodiments of this application may be directly performed by a hardware processor, or may be performed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, steps in the foregoing method embodiments can be implemented by using a hardware integrated logic circuit in the processor, or by using instructions in a software form. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor may implement or perform the methods, steps, and logical block diagrams that are disclosed in embodiments of this application. The general-purpose processor may be a microprocessor, or the processor may be any conventional processor or the like. The steps in the methods disclosed with reference to embodiments of this application may be directly performed by a hardware decoding processor, or may be performed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in this embodiment of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another proper type.

This application further provides a computer program product. The computer program product includes computer program code. When the computer program code is run on a computer, the computer is enabled to perform the steps or procedures performed by the terminal device or the network device in any one of the foregoing method embodiments.

This application further provides a computer-readable storage medium. The computer-readable storage medium stores program code. When the program code is run on a computer, the computer is enabled to perform the steps or procedures performed by the terminal device or the network device in any one of the foregoing method embodiments.

This application further provides a communication apparatus, including a processor and an interface. The interface is configured to send and/or receive a signal, so that the processor performs the steps or procedures performed by the terminal device or the network device in any one of the foregoing method embodiments.

This application further provides a communication system, including a terminal device and a network device.

The foregoing apparatus embodiments are in full correspondence with the method embodiments, and corresponding modules or units perform corresponding steps. For example, a communication unit or a communication interface performs a receiving step or a sending step in the method embodiments, and a processing unit or a processor may perform a step other than the sending step and the receiving step.

In embodiments of this application, the terms and English abbreviations are all examples given for ease of description, and should not constitute any limitation on this application. This application does not exclude a possibility of defining, in an existing or future protocol, another term that can implement a same or similar function.

Terminologies such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a compute device and an application that runs on the compute device may be components. One or more components may reside within a process and/or a thread of execution, and a component may be located on one computer and/or distributed between two or more computers. In addition, these components may be executed from a variety of computer-readable storage media having various data structures stored thereon. For example, the components may communicate by using a local and/or remote process and based on a signal having one or more data packets (for example, data from two components interacting with another component in a local system, a distributed system, and/or across a network such as the internet interacting with another system by using the signal).

A person of ordinary skill in the art may be aware that, in combination with illustrative logical blocks (illustrative logical block) described in embodiments disclosed in this specification and steps (step) may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatuses, and units, refer to a corresponding process in the foregoing method embodiments, and details are not described herein again.

In the several embodiments provided in this application, it should be understood that the disclosed system, apparatus, and method may be implemented in other manners. For example, the foregoing apparatus embodiments are merely examples. For example, division into the units is merely logical function division. In an actual implementation, another division manner may be used. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

In the foregoing embodiments, all or some of the functions of the functional units may be implemented by using software, hardware, firmware, or any combination thereof. When software is used to implement the embodiments, all or a part of the embodiments may be implemented in a form of a computer program product. The computer program product includes one or more computer instructions (programs). When the computer program instructions (programs) are loaded and executed on a computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid state drive, SSD)), or the like.

When the functions are implemented in the form of a software functional unit and sold or used as an independent product, the functions may be stored in a computer-readable storage medium. Based on such an understanding, the technical solutions of this application essentially, the part contributing to the conventional technology, or a part of the technical solutions may be implemented in a form of a software product. The computer software product is stored in a storage medium, and includes several instructions for enabling a computer device (which may be a personal computer, a server, a network device, or the like) to perform all or some of the steps of the methods described in embodiments of this application. The foregoing storage medium includes any medium that can store program code, such as a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, applied to a terminal device, comprising:
determining a first report configuration;
determining a channel sounding reference signal SRS resource set identifier based on the first report configuration;
determining a first SRS resource set based on the SRS resource set identifier;
determining a quantity m of SRS ports based on the first SRS resource set; and
sending a first report, wherein the first report is determined based on the first report configuration, the m SRS ports, and Q ports, and Q is determined based on the first report configuration and/or a capability of the terminal device, wherein
m and Q are positive integers, and Q is greater than or equal to m.

2. The communication method according to claim 1, wherein the first report configuration is used to configure correlation information between channel information corresponding to the port determined based on the first SRS resource set identified by the SRS resource set identifier and channel information corresponding to Q ports determined based on the first report configuration; or the first report configuration is used to configure correlation information between the channel information corresponding to the port determined based on the first SRS resource set identified by the SRS resource set identifier and channel information corresponding to a port determined based on the capability of the terminal device.

3. The communication method according to claim 2, wherein the correlation information configured in the first report configuration comprises at least one of the following: an autocorrelation matrix of the channel information corresponding to the port determined based on the first SRS resource set identified by the SRS resource set identifier, a cross-correlation matrix of the channel information corresponding to the port determined based on the first SRS resource set identified by the SRS resource set identifier and the channel information corresponding to the Q ports determined based on the first report configuration, a cross-correlation matrix of the channel information corresponding to the port determined based on the first SRS resource set identified by the SRS resource set identifier and the channel information corresponding to the port determined based on the capability of the terminal device, a cross-correlation matrix of the channel information corresponding to the port determined based on the first SRS resource set identified by the SRS resource set identifier and channel information corresponding to Q-m ports, and a minimum mean square error MMSE extrapolation coefficient determined by the autocorrelation matrix and the cross-correlation matrix; and
the first report comprises at least one of the following: a first autocorrelation matrix of the channel information corresponding to the m ports, a first cross-correlation matrix of the channel information corresponding to the m ports and the channel information corresponding to the Q ports, a second cross-correlation matrix of the channel information corresponding to the m ports and the channel information corresponding to the Q-m ports, a first MMSE extrapolation coefficient determined based on the first autocorrelation matrix and the first cross-correlation matrix, and a second MMSE extrapolation coefficient determined based on the first autocorrelation matrix and the second cross-correlation matrix, wherein the Q-m ports are ports other than the m ports in the Q ports, and the m SRS ports are used to measure the channel information corresponding to the m ports.

4. The communication method according to claim 2 or 3, wherein the communication method further comprises:
receiving a first downlink reference signal from a network device; and
determining the first report based on the first downlink reference signal.

5. The communication method according to any one of claims 1 to 4, wherein the first report configuration is used to configure the terminal device to indicate the port determined based on the first SRS resource set identified by the SRS resource set identifier; and
the first report comprises first indication information, and the first indication information indicates the m ports.

6. The communication method according to claim 5, wherein the first indication information indicates an index value of each of the m ports.

7. The communication method according to claim 5, wherein the first indication information is a bitmap with a length of Q bits, the Q ports are in one-to-one correspondence with the Q bits, a value of a bit corresponding to each of the m ports in the bitmap is a first value, a value of a bit corresponding to each of the Q-m ports in the bitmap is a second value, the first value is different from the second value, and the Q-m ports are ports other than the m ports in the Q ports.

8. The communication method according to claim 5, wherein the first indication information indicates first index values of the m ports in a first table, and different port combinations correspond to different index values in the first table.

9. The communication method according to any one of claims 1 to 8, wherein the communication method further comprises:
determining a second report configuration;
determining the SRS resource set identifier based on the second report configuration; and
sending a second report, wherein the second report is determined based on the second report configuration, a second downlink reference signal sent by the network device, and the first report.

10. The communication method according to claim 9, wherein the communication method further comprises:
determining first channel information corresponding to the Q ports based on the second downlink reference signal received from the network device;
determining second channel information corresponding to the m ports based on the second downlink reference signal; and
determining third channel information corresponding to the Q ports based on the first report and the second channel information.

11. The communication method according to claim 10, wherein
if a degree of correlation between the first channel information and the third channel information is less than or equal to a preset degree, the sent second report comprises a third value; or
if the degree of correlation between the first channel information and the third channel information is greater than the preset degree, the sent second report comprises a fourth value, wherein
the third value is different from the fourth value.

12. The communication method according to claim 10, wherein the second report comprises indication information indicating a degree of correlation between the first channel information and the third channel information.

13. The communication method according to claim 10, wherein
if a degree of correlation between the first channel information and the third channel information is less than or equal to a preset degree, the sent second report comprises a bitmap with a length of Q bits, wherein a value of each of the Q bits is the second value; or
if the degree of correlation between the first channel information and the third channel information is greater than the preset degree, the sent second report comprises a bitmap with a length of Q bits, the Q ports are in one-to-one correspondence with the Q bits, a value of a bit corresponding to each of the m ports in the bitmap is the first value, a value of a bit corresponding to each of the Q-m ports in the bitmap is the second value, the first value is different from the second value, and the Q-m ports are ports other than the m ports in the Q ports.

14. The communication method according to claim 10, wherein
if a degree of correlation between the first channel information and the third channel information is less than or equal to a preset degree, second indication information comprised in the sent second report indicates a fifth value, wherein the fifth value is different from an index value of any one of the Q ports; or
if the degree of correlation between the first channel information and the third channel information is greater than the preset degree, the first indication information comprised in the sent second report indicates the index value of each of the m ports.

15. The communication method according to claim 10, wherein
if a degree of correlation between the first channel information and the third channel information is less than or equal to a preset degree, second indication information comprised in the sent second report indicates a second index value in the first table; or
if the degree of correlation between the first channel information and the third channel information is greater than the preset degree, the first indication information comprised in the sent second report indicates the first index values of the m ports in the first table, the first table comprises index values of a first type, the index values of the first type comprise the first index value, different index values in the index values of the first type correspond to different port combinations, and the second index value is different from any one of the index values of the first type.

16. The communication method according to any one of claims 10 to 15, wherein
that the degree of correlation between the first channel information and the third channel information is less than or equal to the preset degree specifically comprises: correlation between P eigenvectors corresponding to P maximum eigenvalues of a matrix corresponding to the first channel information and P eigenvectors corresponding to P maximum eigenvalues of a matrix corresponding to the third channel information is less than or equal to a first threshold, wherein P is a positive integer; or comprises: correlation between the matrix corresponding to the first channel information and the matrix corresponding to the third channel information is less than or equal to a second threshold; or comprises: a normalized mean square error NMSE of the matrix corresponding to the first channel information and the matrix corresponding to the third channel information is greater than or equal to a third threshold; and
that the degree of correlation between the first channel information and the third channel information is greater than the preset degree specifically comprises: the correlation between the P eigenvectors corresponding to the P maximum eigenvalues of the matrix corresponding to the first channel information and the P eigenvectors corresponding to the P maximum eigenvalues of the matrix corresponding to the third channel information is greater than the first threshold; or comprises: the correlation between the matrix corresponding to the first channel information and the matrix corresponding to the third channel information is greater than the second threshold; or comprises: the normalized mean square error NMSE of the matrix corresponding to the first channel information and the matrix corresponding to the third channel information is less than the third threshold.

17. A communication method, applied to a network device, comprising:
sending a first report configuration; and
receiving a first report, wherein the first report is determined based on the first report configuration, m SRS ports, and Q ports, m is determined based on a first SRS resource set, the first SRS resource set is determined based on an SRS resource set identifier, the SRS resource set identifier is determined based on the first report configuration, and Q is determined based on the first report configuration and/or a capability of a terminal device, wherein
m and Q are positive integers, and Q is greater than or equal to m.

18. The communication method according to claim 17, wherein the first report configuration is used to configure correlation information between channel information corresponding to the port determined based on the first SRS resource set identified by the SRS resource set identifier and channel information corresponding to Q ports determined based on the first report configuration; or the first report configuration is used to configure correlation information between the channel information corresponding to the port determined based on the first SRS resource set identified by the SRS resource set identifier and channel information corresponding to a port determined based on the capability of the terminal device.

19. The communication method according to claim 18, wherein the correlation information configured in the first report configuration comprises at least one of the following: an autocorrelation matrix of the channel information corresponding to the port determined based on the first SRS resource set identified by the SRS resource set identifier, a cross-correlation matrix of the channel information corresponding to the port determined based on the first SRS resource set identified by the SRS resource set identifier and the channel information corresponding to the Q ports determined based on the first report configuration, a cross-correlation matrix of the channel information corresponding to the port determined based on the first SRS resource set identified by the SRS resource set identifier and the channel information corresponding to the port determined based on the capability of the terminal device, a cross-correlation matrix of the channel information corresponding to the port determined based on the first SRS resource set identified by the SRS resource set identifier and channel information corresponding to Q-m ports, and an MMSE extrapolation coefficient determined by the autocorrelation matrix and the cross-correlation matrix; and
the first report comprises at least one of the following: a first autocorrelation matrix of the channel information corresponding to the m ports, a first cross-correlation matrix of the channel information corresponding to the m ports and the channel information corresponding to the Q ports, a second cross-correlation matrix of the channel information corresponding to the m ports and the channel information corresponding to the Q-m ports, a first MMSE extrapolation coefficient determined based on the first autocorrelation matrix and the first cross-correlation matrix, and a second MMSE extrapolation coefficient determined based on the first autocorrelation matrix and the second cross-correlation matrix, wherein
the Q-m ports are ports other than the m ports in the Q ports, and the m SRS ports are used to measure the channel information corresponding to the m ports.

20. The communication method according to any one of claims 17 to 19, wherein the first report configuration is used to configure the terminal device to indicate the port determined based on the first SRS resource set identified by the SRS resource set identifier; and
the first report comprises first indication information, and the first indication information indicates the m ports.

21. The communication method according to claim 20, wherein the first indication information indicates an index value of each of the m ports;
the first indication information is a bitmap with a length of Q bits, the Q ports are in one-to-one correspondence with the Q bits, a value of a bit corresponding to each of the m ports in the bitmap is a first value, a value of a bit corresponding to each of the Q-m ports in the bitmap is a second value, the first value is different from the second value, and the Q-m ports are ports other than the m ports in the Q ports; or
the first indication information indicates first index values of the m ports in a first table, and different port combinations correspond to different index values in the first table.

22. The communication method according to any one of claims 17 to 21, wherein the communication method further comprises:
sending a second report configuration, wherein the second report configuration comprises the SRS resource set identifier; and
receiving a second report, wherein the second report is determined based on the second report configuration, a second downlink reference signal sent by the network device, and the first report.

23. The communication method according to claim 22, wherein
the second report comprises a third value, indicating that a degree of correlation between first channel information and third channel information is less than or equal to a preset degree; or
the second report comprises a fourth value, indicating that the degree of correlation between the first channel information and the third channel information is greater than the preset degree, wherein
the third value is different from the fourth value, the first channel information is determined by the terminal device based on the second downlink reference signal, the third channel information is determined by the terminal device based on second channel information of the m ports and the first report, and the second channel information of the m ports is determined based on the second downlink reference signal.

24. The communication method according to claim 22, wherein the second report comprises indication information indicating a degree of correlation between first channel information and third channel information; and
the first channel information is determined by the terminal device based on the second downlink reference signal, the third channel information is determined by the terminal device based on second channel information of the m ports and the first report, and the second channel information of the m ports is determined based on the second downlink reference signal.

25. The communication method according to claim 22, wherein
the second report comprises a bitmap with a length of Q bits, and a value of each of the Q bits is the second value, indicating that a degree of correlation between first channel information and third channel information is less than or equal to a preset degree; or
the second report comprises a bitmap with a length of Q bits, a value of a bit corresponding to each of the m ports in the bitmap is the first value, and a value of a bit corresponding to each of the Q-m ports in the bitmap is the second value, indicating that the degree of correlation between the first channel information and the third channel information is greater than the preset degree, wherein the Q ports are in one-to-one correspondence with the Q bits, the first value is different from the second value, and the Q-m ports are ports other than the m ports in the Q ports, wherein
the first channel information is determined by the terminal device based on the second downlink reference signal, the third channel information is determined by the terminal device based on second channel information of the m ports and the first report, and the second channel information of the m ports is determined based on the second downlink reference signal.

26. The communication method according to claim 22, wherein
second indication information comprised in the second report indicates a fifth value, indicating that a degree of correlation between first channel information and third channel information is less than or equal to a preset degree, wherein the fifth value is different from an index value of any one of the Q ports; or
the first indication information comprised in the second report indicates the index value of each of the m ports, indicating that the degree of correlation between the first channel information and the third channel information is greater than the preset degree, wherein
the first channel information is determined by the terminal device based on the second downlink reference signal, the third channel information is determined by the terminal device based on second channel information of the m ports and the first report, and the second channel information of the m ports is determined based on the second downlink reference signal.

27. The communication method according to claim 22, wherein
second indication information comprised in the second report indicates a second index value in the first table, indicating that a degree of correlation between first channel information and third channel information is less than or equal to a preset degree; or
the first indication information comprised in the second report indicates the first index values of the m ports in the first table, indicating that the degree of correlation between the first channel information and the third channel information is greater than the preset degree, wherein the first table comprises index values of a first type, the index values of the first type comprise the first index value, different index values in the index values of the first type correspond to different port combinations, and the second index value is different from any one of the index values of the first type, wherein
the first channel information is determined by the terminal device based on the second downlink reference signal, the third channel information is determined by the terminal device based on second channel information of the m ports and the first report, and the second channel information of the m ports is determined based on the second downlink reference signal.

28. The communication method according to any one of claims 23 to 27, wherein
that the degree of correlation between the first channel information and the third channel information is less than or equal to the preset degree specifically comprises: correlation between P eigenvectors corresponding to P maximum eigenvalues of a matrix corresponding to the first channel information and P eigenvectors corresponding to P maximum eigenvalues of a matrix corresponding to the third channel information is less than or equal to a first threshold, wherein P is a positive integer; or comprises: correlation between the matrix corresponding to the first channel information and the matrix corresponding to the third channel information is less than or equal to a second threshold; or comprises: a normalized mean square error NMSE of the matrix corresponding to the first channel information and the matrix corresponding to the third channel information is greater than or equal to a third threshold; and
that the degree of correlation between the first channel information and the third channel information is greater than the preset degree specifically comprises: the correlation between the P eigenvectors corresponding to the P maximum eigenvalues of the matrix corresponding to the first channel information and the P eigenvectors corresponding to the P maximum eigenvalues of the matrix corresponding to the third channel information is greater than the first threshold; or comprises: the correlation between the matrix corresponding to the first channel information and the matrix corresponding to the third channel information is greater than the second threshold; or comprises: the normalized mean square error NMSE of the matrix corresponding to the first channel information and the matrix corresponding to the third channel information is less than the third threshold.

29. A computer-readable storage medium, wherein the computer-readable storage medium stores a computer program, and when the computer program is run, the method according to any one of claims 1 to 16 or 17 to 28 is implemented.

30. A chip, comprising a processor, wherein the processor is connected to a memory, the memory is configured to store a computer program, and the processor is configured to execute the computer program stored in the memory, to enable the chip to perform the method according to any one of claims 1 to 16 or 17 to 28.
